# FASCICULE DE BREVET EUROPEEN

(11) **EP 2 132 690 B1**
(45) Date de publication et mention de la délivrance du brevet: **22.08.2018**
(21) Numéro de dépôt: 08775612.8
(22) Date de dépôt: 29.02.2008
(51) Int. Cl.: G06Q 10/00

(54) **DISPOSITIF D'ASSISTANCE À LA COMMANDE ET À LA CONFECTION DE PAIRES DE LUNETTES**
HILFSVORRICHTUNG ZUR STEUERUNG UND HERSTELLUNG VON BRILLEN
AID DEVICE FOR CONTROLLING AND MAKING SPECTACLES

(30) Priorité: 13.03.2007 FR 0701797
(43) Date de publication de la demande: 16.12.2009
(73) Titulaire: Essilor International, 94220 Charenton-le-Pont (FR)
(72) Inventeur: GILLET, Valérie, 94220 Charenton Le Pont (FR); HADDADI, Ahmed, 94220 Charenton le Pont (FR); BARANTON, Konogan, 94220 Charenton Le Pont (FR); AMGHAR, Fouad, 94220 Charenton Le Pont (FR)
(74) Mandataire: Jacobacci Coralis Harle
(86) Numéro de dépôt international: PCT/FR2008/000267
(87) Numéro de publication internationale: WO 2008/129167

(56) Documents cités:
- GB-A- 2 387 465
- US-A1- 2003 222 141
- US-A1- 2007 023 126
- US-A1- 2007 023 512

## Description

### DOMAINE TECHNIQUE AUQUEL SE RAPPORTE L'INVENTION

La présente invention concerne de manière générale le domaine de la lunetterie et plus précisément le suivi de la commande et de la confection d'une paire de lunettes.

Elle concerne plus particulièrement un dispositif d'assistance à la commande et à la confection de paires de lunettes, comportant une pluralité de barquettes conçues pour accueillir chacune une paire de lunettes en cours de confection, et une pluralité d'îlots regroupant un ensemble de barquettes dont les paires de lunettes sont sensées être au même stade de confection.

L'invention concerne également un dispositif d'assistance à la commande de lentilles de contact.

### ARRIERE-PLAN TECHNOLOGIQUE

Le métier de l'opticien consiste, lorsqu'un client muni de prescriptions optiques désire acheter une paire de lunettes, à commander des lentilles ophtalmiques, à les détourer et à les assembler avec une monture choisie par le client. Plus précisément, l'opticien procède, entre la prise de commande de la paire de lunettes et la livraison de cette dernière au client, à quatre opérations successives.

Dans un premier temps, l'opticien place dans une barquette initialement vide la monture choisie par le client ainsi qu'une fiche référençant les prescriptions optiques de ce dernier. Puis, l'opticien réalise des mesures relatives à la morphologie du client qu'il note sur cette fiche. Il inscrit ensuite sur une étiquette le nom du client ainsi que la date de livraison prévue, et colle cette étiquette sur la barquette. Il dispose alors cette barquette dans un deuxième îlot de barquettes situé dans son magasin (le premier îlot contenant les barquettes vides).

A intervalles réguliers, typiquement chaque soir, l'opticien récupère l'ensemble des barquettes situées dans ce premier îlot puis il procède par téléphone ou au moyen d'une transaction informatique à la commande, auprès d'un fabricant spécialisé, de lentilles ophtalmiques conformes aux prescriptions notées sur les fiches contenues dans ces barquettes. Une fois les lentilles commandées, il place ces barquettes dans un troisième îlot, en attendant de recevoir les lentilles.

Lorsqu'il reçoit une paire de lentilles disposée dans un étui de protection, l'opticien recherche parmi les barquettes de ce troisième îlot celle dont la fiche contient des prescriptions qui sont conformes aux valeurs de prescription notées sur l'étui de protection. A l'issue de cette recherche fastidieuse, il place les lentilles dans la barquette trouvée et dispose cette barquette dans un quatrième îlot situé dans son atelier. La paire de lunettes est alors en attente que l'opticien ait le temps d'usiner les lentilles à la forme souhaitée.

Une fois ce moment venu, l'opticien procède au centrage puis au détourage et éventuellement au perçage des deux lentilles. Il les assemble ensuite avec leur monture, puis il replace la paire de lunettes issue de cet assemblage dans la barquette. La barquette est ensuite ramenée dans le magasin de l'opticien où elle est déposée dans un cinquième îlot, en attendant que le client vienne récupérer sa paire de lunettes.

L'inconvénient principal d'un tel dispositif est que, lorsque l'opticien souhaite connaître l'état d'avancement de chacune des paires de lunettes en cours de confection dans son magasin et dans son atelier, il est contraint de passer en revue successivement chacune des barquettes afin de détecter les éventuels retards ou anomalies. Cette opération est fastidieuse et difficile à réaliser de façon systématique et fiable, si bien qu'il arrive souvent que des anomalies ou retard ne soient pas détectés à temps. Il est en particulier difficile de vérifier que la date de livraison n'est, comparée à l'état d'avancement de la paire de lunettes, pas trop proche de la date du jour.

Par ailleurs, lorsqu'un client désire connaître l'état d'avancement de sa paire de lunettes, l'opticien est contraint de rechercher, parmi l'ensemble des barquettes du magasin et de l'atelier, celle dont l'étiquette porte le nom du client. On comprend que cette recherche est également longue et fastidieuse.

Enfin, il arrive que l'opticien, en rangeant une barquette dans un îlot, se trompe d'îlot. Dans ce cas, le suivi de la commande ou du processus de confection peut ne pas être convenablement suivi et des retard ou erreur de traitement peuvent en découler. En outre, la recherche de la barquette "égarée" peut aussi s'avérer longue et fastidieuse.

On connait, dans des domaines techniques différents de celui de l'invention, un document US 2003/0222141 qui décrit un dispositif de gestion de stocks d'articles. Dans ce document, chaque article est muni d'une étiquette électronique, par exemple du type RFID. Le dispositif de gestion comporte un système central d'inventaire et de gestion des flux qui enregistre tout changement relatif aux articles. Ce système central peut avantageusement être relié à plusieurs lecteurs d'étiquettes disposés en des endroits différents d'un même entrepôt, de manière à détecter chaque changement de position d'article. Le système central comporte en outre des moyens de prévision de l'évolution des stocks des clients et des moyens d'alerte aptes à envoyer un signal d'alerte dès que le niveau d'un stock d'un client passe en deçà d'un seuil prédéterminé.

On connaît aussi un document GB 2 387 465 qui décrit un dispositif de surveillance de bétail. Chaque animal du bétail porte à cet effet une étiquette électronique d'identification, du type RFID. Le dispositif comporte alors un récepteur qui, en lien avec un système GPS, permet de repérer la position de chaque animal et de suivre leurs cheminements ou leurs transhumances. Ces données sont alors partagées sur un serveur web à la disposition de différents organismes. Ces organismes ont alors la possibilité de mettre à jour leurs données pour par exemple suivre l'histoire du mouvement de vie des troupeaux, ou pour établir un éventuel lien entre l'état de santé des troupeaux et les régions qu'ils traversent, ou pour obtenir une traçabilité de chaque animal, depuis sa naissance jusqu'à sa mort, ou pour générer un signal d'alerte lorsqu'un animal s'écarte du troupeau.

### OBJET DE L'INVENTION

Afin de remédier aux inconvénients précités de l'état de la technique, la présente invention propose un nouveau dispositif d'assistance à la commande et à la confection de paires de lunettes, qui est conçu pour faciliter la recherche des barquettes et pour améliorer le suivi de l'état d'avancement de l'ensemble des paires de lunettes en cours de confection.

Plus particulièrement, on propose selon l'invention un dispositif tel que défini dans la revendication 1.

Ainsi, grâce à l'invention, une simple recherche dans le registre permet de trouver dans quel îlot se trouve une barquette déterminée. Le champ des recherches étant alors restreint, l'opticien peut trouver plus rapidement cette barquette déterminée.

Par exemple, lorsqu'un client demande à l'opticien l'état d'avancement de la confection de sa paire de lunettes, les moyens de requête permettent à l'opticien de trouver l'enregistrement dont la donnée d'identification correspond au client, puis de lire la donnée d'indication d'îlot de cet enregistrement. Cette donnée étant caractéristique de l'état d'avancement de la confection de la paire de lunettes du client, aucune recherche parmi les îlots n'est plus nécessaire de sorte que l'opticien peut répondre rapidement au client.

Par ailleurs, grâce à l'invention, si l'opticien a commis une erreur en rangeant une barquette dans un mauvais îlot, les moyens de requête sont adaptés à déterminer le nombre de barquettes que devrait comporter chaque îlot, ce qui facilite le repérage de l'îlot qui comporte la barquette mal rangée.

A chaque stade de confection d'une paire de lunettes, l'opticien utilise un dispositif électronique et/ou informatique. Ici, la mise à jour du registre profite de l'utilisation d'un tel dispositif pour déterminer à quel stade de confection se trouve chaque paire de lunettes.

En particulier, la commande et la réception de lentilles entraînent nécessairement l'envoi à un fabricant de données relatives à ces lentilles puis, à la réception, la recherche de l'enregistrement dont les données de prescriptions correspondent aux prescriptions figurant sur l'emballage des lentilles reçues. Les moyens de commande et de réception sont alors avantageusement utilisés pour automatiquement mettre à jour le registre.

Les moyens de commande ou de réception de lentilles peuvent être de tout type. Ils peuvent être formés par un clavier et une souris d'ordinateur, ou encore par un écran tactile relié aux moyens de requête et au script de mise à jour. Les moyens de réception peuvent également comporter un lecteur des code-barres figurant sur les pochettes des lentilles livrées, associé à un logiciel adéquat hébergé dans l'ordinateur hôte. Ces moyens de réception s'avéreront particulièrement utiles si les prescriptions figurant sur l'emballage des lentilles ophtalmiques commandées sont contenues dans les code-barres ou sous une forme équivalente.

Ici, les moyens de localisation sont utilisés pour mettre à jour le registre dès qu'ils détectent la présence d'une nouvelle barquette dans leur îlot. Cette mise à jour automatique évite à l'opticien de modifier manuellement le registre dès qu'il déplace une barquette.

Différentes architectures de moyens de localisation sont envisageables. Par exemple, les moyens de localisation matérielle peuvent comporter, attaché à chaque barquette, un organe de radio-identification de la barquette concernée, et, associé à l'un au moins des îlots, un lecteur de radio-identifiant adapté à détecter, en coopération avec lesdits organes de radio-identification, les barquettes situées dans un périmètre donné du lecteur de radio-identifiant correspondant à l'îlot concerné.

En variante, les moyens de localisation matérielle peuvent comporter des moyens de radio-repérage de la position de chaque barquette dans un référentiel global donné, une cartographie référençant la position de chaque îlot dans le référentiel global, et des moyens pour identifier, à partir de ladite cartographie et de ladite position de la barquette, l'îlot dans lequel est située cette barquette.

Dans cette variante, les moyens de localisation sont du type GPS ou équivalent. La cartographie référençant les positions et frontières des îlots, il est aisé de déterminer dans quel îlot se trouve chaque barquette. Cette architecture offre en outre un avantage supplémentaire. En effet, si la barquette n'est rangée dans aucun des îlots, il est malgré tout possible de déterminer sa position exacte en affichant sur un écran d'ordinateur un plan de l'atelier et du magasin sur lequel figure l'emplacement de la barquette recherchée.

D'autres caractéristiques particulièrement avantageuses de l'invention sont également définies dans les revendications 2 à 11.

Parmi ces caractéristiques, préférentiellement, les moyens d'affichage comportent une diode électro-luminescente et/ou un écran d'affichage.

Ainsi, lorsque les moyens de requête recherchent et trouvent un enregistrement déterminé, la diode peut s'illuminer de manière à faciliter le repérage de la barquette correspondant à cet enregistrement trouvé. L'écran d'affichage de chaque barquette permet quant à lui de renseigner l'opticien sur diverses informations utiles, telles que l'état d'avancement de la confection de la paire de lunettes embarquée dans cette barquette, ce qui évite à l'opticien de consulter le registre.

Avantageusement, chaque enregistrement du registre comporte une troisième rubrique pour une donnée relative à la date de livraison prévue pour la paire de lunettes correspondant à cet enregistrement.

Ainsi, les moyens de requête permettent à l'opticien de lire sur l'écran de son ordinateur non seulement l'état d'avancement d'une paire de lunettes en cours de confection, mais aussi la date de livraison prévue de cette paire de lunettes. En comparant ces données, il peut en déduire s'il est en retard dans la confection de cette paire de lunettes. L'opticien peut ainsi mieux gérer ses retards et éventuellement convenir avec le client d'une nouvelle date de livraison, ce qui évite à ce dernier tout déplacement inutile.

Préférentiellement, il est prévu un script de surveillance qui est installé sur l'ordinateur hôte hébergeant le registre ou sur un autre ordinateur communiquant avec ce dernier, pour rechercher les enregistrements du registre dont la valeur de la donnée de date de livraison de la troisième rubrique s'écarte d'une donnée globale de même nature relative à une date courante, telle que la date du jour, d'un laps de temps inférieur à un délai minimum qui est prédéterminé et qui est associé à la valeur de la donnée d'indication d'îlot de la deuxième rubrique de l'enregistrement concerné.

La donnée d'indication d'îlot d'un enregistrement est caractéristique de l'état d'avancement de la paire de lunettes associée à cet enregistrement. On comprend alors que comparer le nombre de jour restant avant la livraison prévue de la paire de lunettes avec cette donnée d'indication d'îlot permet de déterminer si l'état d'avancement de la confection de la paire de lunettes permettra de livrer cette paire de lunettes dans les délais convenus avec le client.

Ce script de surveillance permet ainsi de vérifier automatiquement, à intervalles réguliers, que l'état d'avancement de chaque paire de lunettes en cours de confection permettra de livrer cette paire de lunettes dans les délais. La mise en oeuvre de ce script ne nécessite en particulier aucune intervention de l'opticien. En outre, ce script de surveillance permet de détecter au plus tôt un retard.

Avantageusement, chaque enregistrement du registre comporte une quatrième rubrique pour une donnée relative aux prescriptions d'un futur porteur de la paire de lunettes correspondant à cet enregistrement.

Généralement, lorsque l'opticien réceptionne une paire de lentilles qu'il a commandée, seules les prescriptions de ces lentilles apparaissent sur l'emballage de ces lentilles. En particulier, le nom du client ne figure pas sur cet emballage, ce qui complique actuellement la recherche de la barquette correspondant à cette paire de lentilles reçue.

Mémoriser dans chaque enregistrement du registre les prescriptions des clients permet ici aux moyens de requête de comparer automatiquement les prescriptions apparaissant sur l'emballage des lentilles avec celles mémorisées dans chacun des enregistrements du registre. Les moyens de requête peuvent ainsi rapidement trouver l'enregistrement, et donc la barquette, qui sont associés à la paire de lentilles reçue.

### DESCRIPTION DETAILLEE D'UN EXEMPLE DE REALISATION

La description qui va suivre, en regard des dessins annexés, donnée à titre d'exemple non limitatif, fera bien comprendre en quoi consiste l'invention et comment elle peut être réalisée.

Sur les dessins annexés :
- la figure 1 est une vue schématique d'ensemble d'un premier mode de réalisation d'un dispositif d'assistance à la commande et à la confection de paire de lunettes ;
- la figure 2 est une vue en perspective d'une barquette d'accueil de paire de lunettes du dispositif de la figure 1 ;
- la figure 3 est une vue schématique d'ensemble d'un deuxième mode de réalisation du dispositif d'assistance à la commande et à la confection de paire de lunettes ;
- la figure 4 est une vue en perspective d'une barquette d'accueil de paire de lunettes du dispositif de la figure 3 ;
- la figure 5 est une vue schématique d'ensemble d'un troisième mode de réalisation du dispositif d'assistance à la commande et à la confection de paire de lunettes ;
- la figure 6 est une vue en perspective d'une barquette d'accueil de paire de lunettes du dispositif de la figure 5 ;
- la figure 7 est une vue schématique d'ensemble d'un quatrième mode de réalisation du dispositif d'assistance à la commande et à la confection de paire de lunettes ;
- la figure 8 est une vue en perspective d'une barquette d'accueil de paire de lunettes du dispositif de la figure 7 ;
- la figure 9 est un schéma de principe du fonctionnement d'une unité de stockage de données et de traitement d'informations des dispositifs des figures 1, 3, 5 et 7.

### Premier mode de réalisation du dispositif

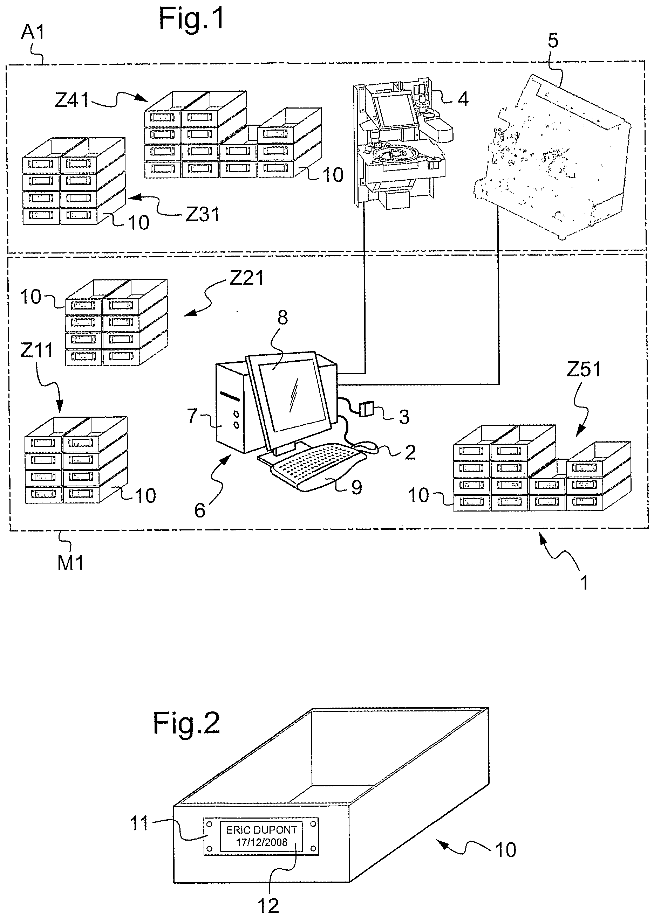

Sur les figures 1 et 2, on a représenté schématiquement un premier mode de réalisation d'un dispositif d'assistance 1 à la commande et à la confection de paire de lunettes.

Ce dispositif d'assistance 1 est généralement réparti sur deux sites distincts, dont un magasin M1 pour l'accueil de clients par un opticien et un atelier A1 pour l'assemblage des paires de lunettes à l'écart des clients.

L'atelier A1 et le magasin M1 comportent tous deux des espaces de rangement appelés îlots, formés par exemple par de simples tables sur lesquelles peuvent être entreposées des barquettes 10 d'accueil de paires de lunettes. Ces barquettes 10 seront décrites plus en détail dans la suite du texte.

Le magasin M1 comporte ici trois îlots distincts Z11, Z21, Z51 tandis que l'atelier A1 en comporte deux Z31, Z41. Ces cinq îlots seront décrits dans leur ordre d'utilisation par l'opticien lors de la commande et de la confection d'une paire de lunettes.

Le magasin M1 comporte un premier îlot Z11 sur lequel sont entreposées des barquettes 10 vides à la disposition de l'opticien lors d'une commande d'une nouvelle paire de lunettes par un client.

Ce magasin M1 comporte en outre un deuxième îlot Z21 sur lequel sont entreposées des barquettes 10 dont chacune accueille, suite à la commande d'une paire de lunettes par un client, une fiche sur laquelle sont inscrites les prescriptions du client ainsi que la monture de lunettes choisie par le client. Les paires de lunettes en cours de confection dont les barquettes sont situées dans cet îlot Z21 sont alors toutes dans un même état d'avancement : en attente que l'opticien commande à un fabricant les lentilles ophtalmiques de ces paires de lunettes.

L'atelier A1 comporte quant à lui un troisième îlot Z31 sur lequel sont entreposées des barquettes 10 accueillant toujours, suite à la commande des lentilles ophtalmiques, la fiche de prescriptions du client ainsi que la monture de lunettes choisie par le client. Les paires de lunettes en cours de confection dont les barquettes sont situées dans cet îlot Z31 sont alors toutes dans un même état d'avancement : en attente de réception des lentilles ophtalmiques commandées au fabricant de lentilles.

L'atelier A1 comporte de plus un quatrième îlot Z41 sur lequel sont entreposées des barquettes 10 dont chacune accueille, suite à la réception des lentilles ophtalmiques, la fiche de prescriptions du client, la monture de lunettes choisie par le client ainsi que les deux lentilles ophtalmiques non détourées reçues par l'opticien. Les paires de lunettes en cours de confection dont les barquettes sont situées dans cet îlot Z41 sont alors toutes dans un même état d'avancement : en attente que l'opticien détoure les lentilles ophtalmiques et les assemble avec la monture sélectionnée par le client.

L'atelier A1 comporte en outre une unité de centrage 4 et une unité de détourage et de perçage 5 de lentilles ophtalmiques. Il peut également comporter un dispositif de contrôle (non représenté) destiné à vérifier que chaque lentille ophtalmique détourée présente une forme et des fonctions optiques correspondant aux prescriptions du client auquel elles sont destinées.

Une telle unité de centrage 4 est décrite plus en détail par exemple dans le document FR 2 866 718 appartenant à la demanderesse ou est commercialisée sous la marque Kappa CT D. Elle permet de déterminer la position que doit occuper chaque lentille sur la monture afin d'être convenablement centrée en regard de la pupille de l'oeil du client de manière à ce qu'elle exerce convenablement la fonction optique pour laquelle elle a été conçue.

Une telle unité de détourage et de perçage 5 est décrite plus en détail par exemple dans le document FR 2 887 168 appartenant à la demanderesse ou est commercialisée sous la marque Kappa CT D. Elle permet de découper le contour de chaque lentille à la forme souhaitée, compte tenu des paramètres de centrage définis par l'unité de centrage 4, pour qu'elles puissent se fixer à la monture de lunettes correspondante.

Un tel dispositif de contrôle, également appelé fronto-imageur, est décrit plus en détail par exemple dans le document EP 1 692 563 appartenant à la demanderesse.

Le magasin M1 comporte enfin un cinquième îlot Z51 sur lequel sont entreposées des barquettes 10 contenant la fiche de prescriptions du client ainsi que la paire de lunettes assemblée. Les paires de lunettes en cours de confection dont les barquettes 10 sont situées dans cet îlot Z51 sont alors toutes dans un même état d'avancement : en attente que le client vienne les récupérer afin de les essayer puis de les acheter.

Le magasin M1 comprend par ailleurs un ordinateur hôte 6 comportant une unité de stockage de données et de traitement d'informations 7, des moyens d'affichage de données formés ici par un écran 8, des premiers moyens d'acquisition de données formés ici par un clavier 9 et une souris 2 et des seconds moyens d'acquisition de données formés par un lecteur de code-barres 3.

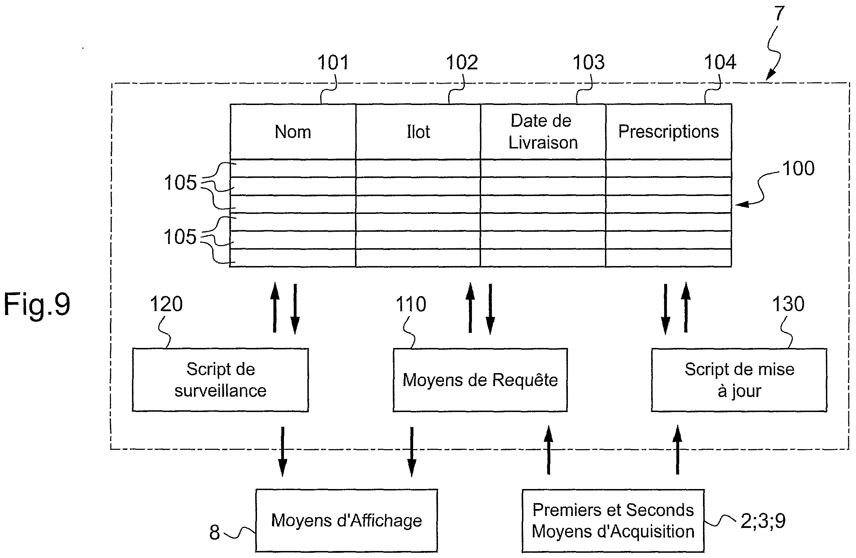

Comme le montre plus précisément la figure 9, l'unité de stockage de données et de traitement d'informations 7 héberge en particulier un registre 100 de base de données évolutif et un logiciel de gestion du registre.

Le registre 100 comporte une pluralité d'enregistrements 105 dont chacun d'entre eux est associé à une paire de lunettes en cours de confection. Le nombre d'enregistrements 105 est alors égal au nombre de barquettes 10 disposées dans les deuxième, troisième, quatrième et cinquième îlots Z21, Z31, Z41, Z51.

Chaque enregistrement 105 comprend ici quatre rubriques dont :
- une première rubrique 101 pour une donnée d'identification de la paire de lunettes associée à l'enregistrement 105, à savoir ici le nom du client,
- une deuxième rubrique 102 pour une donnée d'indication de l'îlot Z21, Z31, Z41, Z51 dans lequel est sensée être disposée la barquette 10 correspondant à l'enregistrement 105,
- une troisième rubrique 103 pour une donnée relative à la date de livraison 103 prévue de la paire de lunettes associée à l'enregistrement 105, à savoir ici la date de livraison présentée sous la forme JJMMAAAA (par exemple 06022007 pour le 6 février 2007),
- une quatrième rubrique 104 pour une donnée relative aux prescriptions du client (le contenu exact de cette donnée sera décrit plus en détail par la suite).

En variante, si chaque barquette comporte un numéro d'identification (qui est par exemple gravé sur la barquette elle-même), chaque enregistrement du registre peut comporter une cinquième rubrique pour le numéro d'identification de la barquette correspondant à cet enregistrement.

Le logiciel de gestion du registre comporte quant à lui des moyens de requête 110 adaptés à émettre dans le registre 100 une requête sur l'une ou l'autre des rubriques 101, 102, 103, 104 des enregistrements 105.

Les moyens de requête 110 forment une interface entre le registre 100 et les moyens d'acquisition et d'affichage de l'ordinateur hôte 6. Ils sont conçus pour lire et écrire des données dans le registre 100. Ils sont ainsi adaptés à créer un nouvel enregistrement 105 dans le registre 100, à effacer un enregistrement 105 du registre 100, et à rechercher, parmi les enregistrements 105 du registre 100, celui ou ceux dont les rubriques contiennent des données correspondant à des données recherchées.

Plus précisément, ces moyens de requête 110 sont adaptés à effectuer une recherche d'un ou plusieurs enregistrements 105 lorsque l'opticien acquiert, via le clavier 9 et la souris 2, des données correspondant à celles contenues dans les rubriques du registre 100. A cet effet, le logiciel de gestion est muni d'une interface graphique facilitant l'acquisition de données par l'opticien. Les moyens de requête 110 sont également adaptés à effectuer une telle recherche lorsqu'un code-barre est lu par le lecteur de code-barres 3. Enfin, ces moyens de requête sont adaptés à commander l'affichage sur l'écran 8 des données contenues dans les rubriques des enregistrements 105 trouvés.

Le logiciel de gestion du registre comporte en outre un script de surveillance 120 et un script de mise à jour 130 des données contenues dans les rubriques 101, 102, 103, 104 des enregistrements 105 du registre 100.

Le script de surveillance 120 est conçu pour rechercher, à intervalles réguliers ou sur commande, via les moyens d'acquisition 2, 9, les enregistrements 105 du registre 100 dont la valeur de la donnée de date de livraison de la troisième rubrique 103 s'écarte de la date du jour d'un laps de temps inférieur à un délai minimum qui est prédéterminé et qui est associé à la valeur de la donnée d'indication d'îlot de la deuxième rubrique 102 de l'enregistrement 105 concerné.

Dans cette optique, le script de surveillance 120 est adapté à récupérer la date du jour qui est généralement mémorisée dans l'ordinateur hôte 6. Le script de surveillance 120 comporte par ailleurs en mémoire le laps de temps minimum qui est nécessaire à l'opticien pour terminer dans les délais prévus la confection d'une paire de lunettes située dans l'un ou l'autre des îlots Z21, Z31, Z41, Z51.

Plus précisément, lorsque la donnée d'indication d'îlot de la deuxième rubrique 102 d'un enregistrement 105 indique que la barquette correspondante est située dans l'îlot Z21, le script de surveillance 120 a en mémoire que le laps de temps nécessaire pour terminer la commande est de par exemple 5 jours ; lorsque la donnée d'indication 102 d'un enregistrement 105 indique que la barquette correspondante est située dans l'îlot Z31, le script de surveillance 120 a en mémoire que le laps de temps nécessaire pour terminer la commande est de par exemple 3 jours ; lorsque la donnée d'indication 102 d'un enregistrement 105 indique que la barquette correspondante est située dans l'îlot Z41, le script de surveillance 120 a en mémoire que le laps de temps nécessaire pour terminer la commande est par exemple de 1 ou 2 jours ; lorsque la donnée d'indication 102 d'un enregistrement 105 indique que la barquette correspondante est située dans l'îlot Z51, le script de surveillance 120 a en mémoire que le laps de temps nécessaire pour terminer la commande est de 0 jour.

Alors, afin de déterminer les enregistrements 105 pour lesquels les confections des paires de lunettes sont en retard, le script de surveillance 120 met en oeuvre le processus suivant. Au cours d'une première étape, il lit, pour chaque enregistrement 105 du registre 100, la date de livraison mémorisée dans la troisième rubrique 103 de cet enregistrement 105 puis il calcule la différence entre la date du jour et cette date de livraison. Au cours d'une deuxième étape, le script de surveillance 120 lit la donnée d'indication d'îlot contenue dans la deuxième rubrique 102 de cet enregistrement 105 et il en déduit, grâce aux laps de temps mémorisés, le délai associé à cette donnée d'indication d'îlot. Enfin, au cours d'une troisième étape, le script de surveillance 120 compare ce délai avec la différence de dates calculée. Si le délai est inférieur à la différence de dates calculée (ce qui signifie que les délais sont respectés), le script de surveillance 120 ré-effectue les mêmes opérations sur l'enregistrement 105 suivant. En revanche, si ce délai est supérieur à la différence de dates calculée (ce qui signifie que les délais ne sont pas respectés), le script de surveillance 120 mémorise le nom du client contenu dans la première rubrique 101 de cet enregistrement 105, puis il ré-effectue les mêmes opérations sur l'enregistrement 105 suivant. Lorsque le script de surveillance 120 a lu l'ensemble des enregistrements 105 du registre 100, il génère un message d'alerte à afficher sur l'écran 108 contenant les noms mémorisés, afin que l'opticien puisse prendre les mesures nécessaires pour, soit rattraper ces retards, soit avertir les clients d'un éventuel retard de leurs commandes.

Le script de mise à jour 130 est quant à lui conçu pour mettre à jour sur commande la valeur de la donnée d'indication d'îlot de la deuxième rubrique 102 de chaque enregistrement 105 du registre 100 en fonction du stade de confection de la paire de lunettes correspondante.

Dans ce mode de réalisation de l'invention, l'ordinateur hôte 6 comporte des premiers moyens de communication (non représentés) avec un ordinateur distant disposé chez le fabricant de lentilles ophtalmiques. Ces premiers moyens de communication peuvent par exemple comporter un modem branché sur le réseau Internet. Ils permettent de directement commander des lentilles chez le fabricant de lentilles à partir des prescriptions 104 mémorisées dans le registre 100. L'ordinateur hôte 6 comporte en outre des seconds moyens de communication avec l'unité de centrage 4, avec l'unité de détourage et de perçage 5 et avec le dispositif de contrôle (non représenté). Ces seconds moyens de communication sont ici constitués par de simples câbles réseaux.

Ainsi, comme cela sera expliqué plus en détail dans la suite, les opérations qui consistent à commander une paire de lentilles, à la recevoir, à la centrer, à l'usiner et à contrôler qu'elle est correctement montée sur sa monture peuvent être détectées par le script de mise à jour 130 et retranscrites par ce dernier comme des ordres de mise à jour du registre 100. Le script de mise à jour 130 peut également directement recevoir un ordre de mise à jour du registre depuis l'opticien à l'aide des moyens d'acquisition manuelle de l'ordinateur hôte 6 que sont le clavier 9 et la souris 2.

Les barquettes 10 sont des boîtes parallélépipédiques, ouvertes sur leurs faces supérieures et empilables les unes au-dessus des autres. Elles sont adaptées à contenir la monture et les lentilles d'une paire de lunettes ainsi que la fiche de prescriptions d'un client particulier. Ces barquettes 10 comportent en face avant un emplacement 11 dans lequel peut être insérée une étiquette 12 sur laquelle sont inscrits le nom du client et la date de livraison prévue de cette paire de lunettes.

### Second mode de réalisation du dispositif

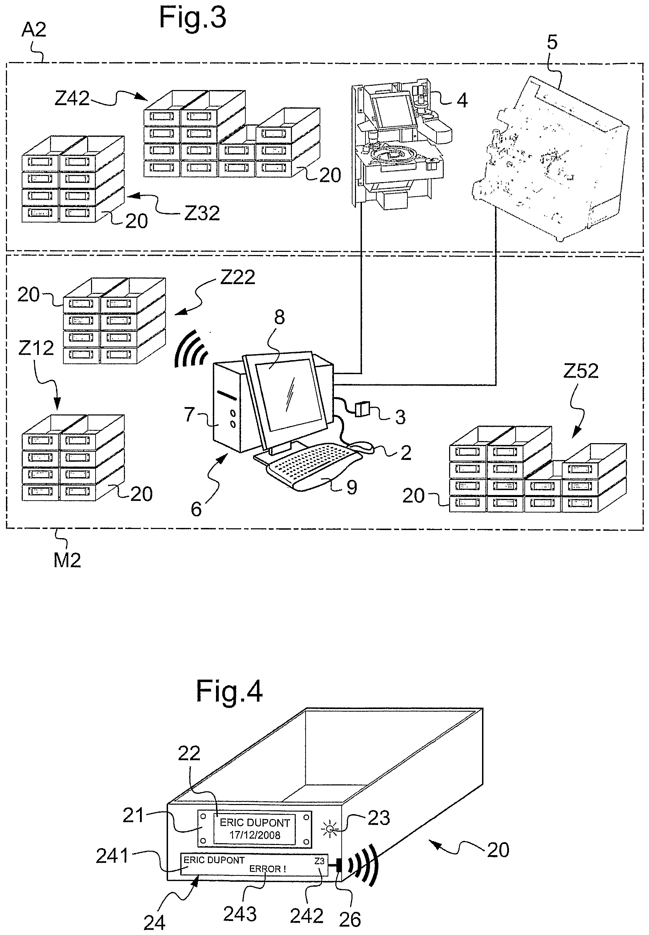

Dans un deuxième mode de réalisation de l'invention représenté sur les figures 3 et 4, le dispositif d'assistance 1 comporte, dans un magasin M2 et un atelier A2, des premier, deuxième, troisième, quatrième et cinquième îlots Z12, Z22, Z32, Z42, Z52, une unité de centrage 4 et une unité de détourage et de perçage 5. Ces divers éléments sont identiques à ceux décrits dans le premier mode de réalisation du dispositif d'assistance 1.

L'ordinateur hôte 6 du magasin M2 est analogue à celui précédemment décrit mais il comporte en outre des troisièmes moyens de communication avec les barquettes 20. Ces troisièmes moyens de communication sont de type sans fil et comportent par exemple une carte WIFI.

Dans ce mode de réalisation, chaque barquette 20 comporte, outre un emplacement 21 dans lequel est insérée une étiquette 21 d'identification de la barquette 20, une diode électro-luminescente rouge 23 et un écran d'affichage 24 reliés à des moyens de communication 26 adaptés à communiquer avec les troisièmes moyens de communication de l'ordinateur hôte 6. Ces moyens de communication 26 comportent en outre en mémoire un identifiant comprenant le nom du client auquel est destinée la paire de lunettes que la barquette 20 accueille.

L'écran d'affichage 24 peut être de tout type, par exemple LCD, TFT, LED ou encore OLED... Il est alimenté par une batterie d'accumulateurs autonome (non représentée) que l'opticien met en charge lorsque la barquette 20 n'est pas utilisée et qu'elle est disposée dans le premier îlot Z12. En variante, la batterie d'accumulateurs peut être alimentée en courant via des alimentations sans fil, par exemple à induction magnétique, disposées dans les îlots Z22, Z32, Z42, Z52. En variante encore, chaque batterie d'accumulateurs peut être une batterie longue durée jetable et interchangeable.

Les troisièmes moyens de communication de l'ordinateur hôte 6 sont tout d'abord reliés aux moyens de requête 110 pour délivrer un signal de recherche. Ainsi, lorsqu'un enregistrement 105 est trouvé par les moyens de requête, les troisièmes moyens de communication sont adaptés à automatiquement délivrer un signal comprenant, d'une part, le nom du client mémorisé dans la première rubrique 101 de l'enregistrement 105 trouvé, et, d'autre part, une donnée de recherche. La barquette 20, dont l'identifiant correspond au nom du client porté par le signal, commande alors l'illumination de sa diode électro-luminescente rouge 23 de manière à faciliter la recherche de cette barquette 20 parmi l'ensemble des barquettes du magasin M2 et de l'atelier A2.

Les troisièmes moyens de communication de l'ordinateur hôte 6 sont en outre reliés au script de mise à jour 130. Ainsi, lorsque l'une ou l'autre des rubriques d'un enregistrement 105 est mise à jour, les troisièmes moyens de communication sont adaptés à délivrer un signal comprenant, d'une part, le nom du client mémorisé dans la première rubrique 101 de cet enregistrement 105, et, d'autre part, les données mémorisées dans les autres rubriques 102, 103, 104 de cet enregistrement 105. La barquette 20, dont l'identifiant correspond au nom du client porté par le signal, commande alors l'affichage sur son écran d'affichage 24 de tout ou partie de ces données.

Cet écran 24 est ici adapté à afficher le nom 241 du client, un identifiant 242 de l'îlot dans lequel est sensée se trouver la barquette 20 et un éventuel message généré par les moyens de requête 110 ou par le script de surveillance 120 ou encore par les moyens de communication 26 de cette barquette 20. Ce message peut par exemple être un message d'alerte en cas de retard dans la confection de la paire de lunettes ou un message d'erreur si les moyens de communication 26 de la barquette 20 ne «captent» pas le réseau du magasin M2 ou de l'atelier A2.

### Troisième mode de réalisation du dispositif

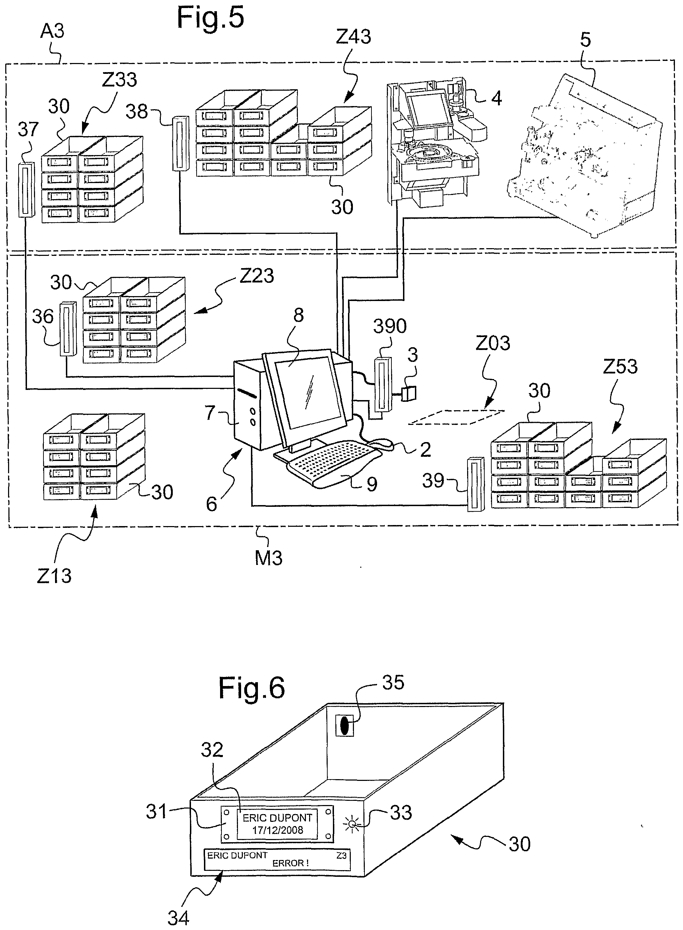

Dans un troisième mode de réalisation de l'invention représenté sur les figures 5 et 6, le dispositif d'assistance 1 comporte, dans un magasin M3 et un atelier A3, des premier, deuxième, troisième, quatrième et cinquième îlots Z13, Z23, Z33, Z43, Z53, une unité de centrage 4 et une unité de détourage et de perçage 5. Ces différents éléments sont analogues à ceux décrits dans le premier mode de réalisation du dispositif d'assistance 1. Le dispositif d'assistance comporte en outre des moyens de localisation matérielle aptes à identifier les barquettes 30 matériellement présentes dans chaque îlot.

A cet effet, chaque barquette 30 comporte non seulement une diode électro-luminescente rouge 33 et un écran d'affichage 34, mais aussi un organe de radio-identification, à savoir ici un élément RFID 35. En correspondance avec ces éléments RFID, chacun des deuxième, troisième, quatrième et cinquième îlots Z23, Z33, Z43, Z53 est pourvu d'un lecteur de radio-identifiant, constitué ici par un lecteur RFID 36, 37, 38, 39.

L'élément RFID 35 (Radio Frequency Identification) constitue un moyen de radio-identification de chaque barquette 30 et de sa position dans l'un ou l'autre des îlots Z23, Z33, Z43, Z53.

Pour rappel, l'identification par radio fréquence est une méthode pour stocker et récupérer des données à distance relative à un objet en utilisant un élément RFID implanté dans cet objet. Un élément RFID comporte classiquement une antenne associée à une puce électronique, qui lui permet d'être alimenté électriquement par un flux d'onde et de recevoir et de répondre aux requêtes radio émises depuis un lecteur par radio fréquence, appelé lecteur RFID. Ce lecteur RFID est ici en outre conçu pour enregistrer des données dans l'élément RFID. Ici, les éléments RFID se présentent sous la forme de petites gélules en résine coulée de diamètres très faibles fixées à l'intérieur des barquettes 30.

L'élément RFID 35 de chaque barquette 30 comporte un identifiant qui peut soit être invariable et dédié à la barquette 30, soit être modifié en fonction de la paire de lunettes associée à la barquette 30. Ici, l'identifiant est enregistré dans l'élément RFID 35 lors de la commande d'une paire de lunettes par un client et est constitué par le nom de ce client. Cet identifiant correspond donc à un nom enregistré dans la première rubrique 101 de l'un des enregistrements 105 du registre 100. L'élément RFID 35 enregistre en outre ici les informations à afficher sur l'écran d'affichage 34. Il est dans cette optique relié à l'écran d'affichage 34 de la barquette 30, ainsi qu'à la diode électro-luminescente 33.

En variante, l'écran d'affichage peut être relié à des moyens de communication propres, indépendants de l'élément RFID, et adaptés à directement communiquer avec l'ordinateur hôte 6. Dans ce cas, l'élément RFID de chaque barquette n'enregistre que l'identifiant de l'enregistrement correspondant à cette barquette.

D'autre part, chacun des lecteurs RFID 36, 37, 38, 39 est relié à l'unité de stockage de données et de traitement d'informations 7 de l'ordinateur hôte 6 au moyen de câbles électriques. Chaque lecteur RFID présente une portée de lecture qui correspond globalement à la taille de son îlot (c'est-à-dire à la superficie de la table sur laquelle sont entreposées les barquettes 30 de cet îlot), de manière à ce qu'il puisse communiquer avec les éléments RFID des barquettes 30 disposées dans son îlot, et seulement avec ceux des barquettes de cet îlot. C'est en ce sens que les lecteurs RFID, associés aux éléments RFID, forment des moyens de localisation des barquettes.

Plus précisément, les lecteurs RFID 36, 37, 38, 39 sont reliés aux moyens de requête 110 de l'unité de stockage de données et de traitement d'informations 7 de l'ordinateur hôte 6.

Par conséquent, lorsqu'une recherche est entreprise par les moyens de requête 110 dans le registre 100 et qu'un enregistrement est trouvé, les lecteurs RFID sont adaptés à déterminer la position matérielle de la barquette 30 correspondant à cet enregistrement 105. Il n'y a donc pas d'erreur possible dans la localisation de la barquette. En outre, les moyens de requête 110 peuvent commander, via le lecteur RFID correspondant, l'illumination de la diode 33 de la barquette.

D'autre part, les lecteurs RFID 36, 37, 38, 39 sont reliés au script de mise à jour 130 de l'unité de stockage de données et de traitement d'informations 7 de l'ordinateur hôte 6. Ils sont alors adaptés à délivrer, à intervalles réguliers (ou lorsqu'une nouvelle barquette est détectée dans un îlot), un signal comprenant un identifiant de chaque barquette présente dans l'îlot (ou de la nouvelle barquette détectée), et un identifiant de l'îlot dans lequel elles se trouvent positionnées.

Deux variantes de réalisation du script de mise à jour 130 sont alors possibles.

Dans une première variante, ce signal est exploité par le script de mise à jour 130 pour contrôler la cohérence entre, d'une part, la donnée d'indication d'îlot de la deuxième rubrique 102 de l'enregistrement 105 correspondant à l'identifiant de la barquette 30, et, d'autre part, l'identifiant de l'îlot porté par le signal. Si ces deux informations sont incohérentes, le script de mise à jour 130 est adapté à générer un message d'erreur à afficher sur l'écran 8 de l'ordinateur hôte 6 pour avertir l'opticien d'une erreur de positionnement de cette barquette 30. Ils sont également adaptés à commander l'illumination de la diode électro-luminescente 33 de cette barquette 30, via le lecteur RFID correspondant, pour faciliter le travail de recherche de l'opticien.

Dans une deuxième variante, ce signal est directement exploité pour mettre à jour la donnée d'indication d'îlot de la deuxième rubrique 102 de l'enregistrement 105 correspondant à l'identifiant de la barquette 30 en fonction de l'identifiant de l'îlot porté par le signal. L'opticien n'est ainsi plus forcé de mettre manuellement à jour ces données à chaque fois qu'il change une barquette d'îlot. Toutefois, dans cette variante, une erreur de positionnement d'une barquette ne peut alors plus être détectée par l'ordinateur hôte 6.

Par ailleurs, le magasin M3 comporte une zone d'enregistrement Z03 qui est disposée à côté de l'ordinateur hôte 6 et qui est ici constituée par une portion dédiée de la table sur laquelle est disposé l'ordinateur hôte 6. Cette zone d'enregistrement Z03 est munie d'un lecteur RFID 390. Elle permet à l'opticien, lors d'une commande d'une nouvelle paire de lunettes par un client, de disposer une barquette 30 dans cette zone d'enregistrement Z03 pour enregistrer dans son élément RFID 35 un nouvel identifiant correspondant au nom du client.

En variante, le magasin peut être dépourvu d'une telle zone d'enregistrement. Dans ce cas, pour associer une barquette à un nouvel enregistrement, l'opticien peut par exemple utiliser le lecteur RFID du deuxième îlot.

L'ordinateur hôte 6 peut sinon être conçu pour affecter automatiquement l'une des barquettes non utilisée à ce nouvel enregistrement (comme cela sera mieux décrit par la suite). Dans cette variante, il est nécessaire que l'ordinateur hôte ait en mémoire les identifiants de chaque barquette du magasin et de l'atelier de manière à ce qu'il puisse déterminer celles qui sont déjà utilisées et celles qui sont vides.

Par ailleurs, les seconds moyens de communication reliant les unités de centrage, de détourage et de contrôle avec l'ordinateur hôte peuvent en variante être constitués, non pas par des câbles réseaux, mais plutôt par des lecteurs RFID intégrés dans l'une et/ou l'autre de ces unités de centrage, de détourage et de contrôle. Ces lecteurs RFID sont alors adaptés à délivrer vers l'ordinateur hôte, lorsqu'une barquette est détectée à proximité immédiate de l'unité correspondante, un signal comprenant un identifiant de la barquette détectée, et un identifiant de l'unité à côté de laquelle elle se trouve positionnée. En retour, l'ordinateur hôte est adapté à renvoyer à cette unité les données mémorisées dans l'enregistrement correspondant du registre, pour que cette unité puisse procéder au centrage et/ou au détourage et/ou au perçage et/ou au contrôle des lentilles ophtalmiques.

### Quatrième mode de réalisation du dispositif

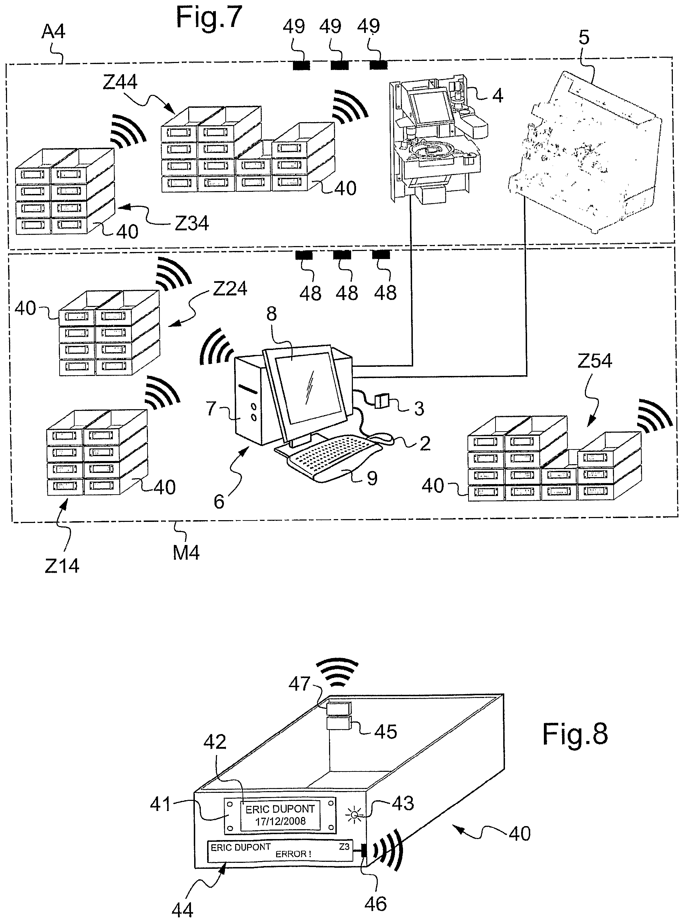

Dans un quatrième mode de réalisation de l'invention représenté sur les figures 7 et 8, le dispositif d'assistance 1 comporte, dans un magasin M4 et un atelier A4, des premier, deuxième, troisième, quatrième et cinquième îlots Z14, Z24, Z34, Z44, Z54, une unité de centrage 4 et une unité de détourage et de perçage 5. Ces différents éléments sont analogues à ceux décrits dans le premier mode de réalisation du dispositif d'assistance 1. Ce dispositif comporte ici également des moyens de localisation des barquettes 40 présentes dans chaque îlot. Ces moyens de localisation sont en revanche différents de ceux décrits ci-dessus.

A cet effet, chaque barquette 40 comporte non seulement une diode électro-luminescente rouge 43 et un écran d'affichage 44 reliés à des moyens de communication 46, mais aussi des moyens de radio-positionnement 45, 47.

La diode électro-luminescente rouge 43, l'écran d'affichage 44 et les moyens de communication 46, ainsi que leurs fonctionnements, sont identiques à ceux décrits dans le deuxième mode de réalisation de l'invention (figures 3 et 4).

En correspondance avec les moyens de radio-positionnement 45, 47 des barquettes 40, le magasin M4 et l'atelier A4 sont chacun pourvus de moyens de radio-repérage des positions des barquettes 40. Ces moyens de radio-repérage sont des émetteurs-récepteurs 48, 49 disposés à des positions précises dans le magasin M4 et dans l'atelier A4. Trois émetteurs-récepteurs 48 sont ici disposés dans le magasin M4 et trois autres émetteurs-récepteurs 49 sont disposés dans l'atelier A4. Ils sont adaptés, lorsqu'ils reçoivent un signal radio, à le renvoyer immédiatement accompagné d'un identifiant qui leur est propre. L'unité de stockage de données et de traitement d'informations 7 comporte en outre en mémoire une cartographie précise de l'atelier A4 et du magasin A4, qui référence en particulier les positions des îlots par rapport à celles des émetteurs-récepteurs 48, 49.

Les moyens de radio-positionnement 45, 47 de chaque barquette 40 sont quant à eux équipés non seulement d'un émetteur-récepteur radio 47, mais aussi d'une horloge 45 précise. Ainsi, pour se positionner dans l'espace, une barquette 40 envoie tout d'abord un signal radio qui lui est retransmis par les trois émetteurs-récepteurs 48, 49 de l'atelier A4 ou du magasin A4 (selon que la barquette est située dans l'un ou l'autre de ces deux sites). Puis, l'horloge de la barquette 40 calcule la durée entre l'émission et la réception du signal radio pour chacun des trois émetteurs-récepteurs 48, 49, ce qui permet à la barquette 40 de déterminer les distances qui la séparent de chacun de ces trois émetteurs-récepteurs. Ces distances sont ensuite transmises à l'ordinateur hôte 6, via les moyens de communication 46 de la barquette 40. A l'aide de la cartographie, les moyens de surveillance 120 peuvent ainsi déterminer en temps réel la position de chaque barquette 40 dans le magasin ou l'atelier.

En variante, à la manière d'un GPS, les barquettes 40 peuvent être dépourvues d'horloge. Dans cette variante, les moyens de radio-repérage 48, 49 disposés dans le magasin et dans l'atelier sont des émetteurs pourvus d'horloges très précises (type horloge atomique). Ces émetteurs envoient à intervalles réguliers un signal radio qui est daté précisément grâce à leur horloge et qui comporte la position exacte de l'émetteur sur la cartographie. Ainsi, chaque barquette peut capter les signaux émis par les trois émetteurs puis, en mesurant les écarts relatifs entre les dates des signaux reçus, déduire sa distance par rapport à chacun de ces émetteurs. Ces distances sont ensuite transmises aux moyens de surveillance 120 de l'ordinateur hôte 6 qui, grâce à la cartographie, peuvent alors déterminer en temps réel la position de la barquette 40 dans le magasin ou l'atelier.

Bien sûr, encore en variante les moyens de radio-positionnement de chaque barquette pourraient comporter un émetteur-récepteur GPS (ou équivalent) adapté à communiquer avec les satellites du système GPS.

Les procédés de communication entre le script de mise à jour 130 et les moyens de localisation sont identiques à ceux expliqués dans le troisième mode de réalisation de l'invention. En particulier, la position détectée de chaque barquette peut être utilisée, soit pour mettre à jour les données mémorisées dans le registre, soit pour contrôler que les données mémorisées dans le registre sont en cohérence avec les positions réelles des barquettes.

Dans un autre mode de réalisation de l'invention non représenté, les barquettes des troisième, quatrième et cinquième îlots sont avantageusement rangées par l'opticien en colonnes, selon le jour d'arrivée de chaque barquette dans l'îlot correspondant.

Le registre comporte alors, pour chaque enregistrement, une rubrique supplémentaire pour une donnée relative à la date d'arrivée de la barquette dans son îlot. Ainsi, lorsque l'opticien recherche une barquette, le logiciel de suivi peut trouver non seulement dans quel îlot est disposée cette barquette, mais également la colonne de l'îlot dans laquelle se trouve la barquette. La recherche de la barquette est alors rendue plus aisée et plus rapide.

### Procédé

Le procédé sera préférentiellement décrit en référence au premier mode de réalisation de l'invention représenté sur les figures 1 et 2.

### Etape 1 - Chez l'optométriste

Au cours d'une première étape, le client qui souhaite acquérir une nouvelle paire de lunettes se rend chez un optométriste qui procède à différents examens destinés à déterminer son acuité visuelle. Ces examens permettent de définir des prescriptions optiques permettant de réaliser des lentilles aptes à corriger la vue du client.

Ces prescriptions comportent en particulier le type de lentille choisie (unifocale, bifocale ou progressive) et le pouvoir de réfringence que devront présenter les lentilles, c'est-à-dire leurs puissances optiques sphériques, cylindriques et prismatiques. Elles peuvent bien sûr comporter d'autres informations telles que, dans le cas des lentilles bifocales ou progressives, les différences de puissances entre la vision de près et la vision de loin du client.

### Etape 2 - Enregistrement d'une commande

Au cours d'une deuxième étape, le client se rend dans le magasin M1 de l'opticien et fournit à ce dernier une fiche sur laquelle sont inscrites ses prescriptions.

L'opticien fait alors choisir au client une monture à son goût parmi une pluralité de montures de présentation dont il dispose. Cette monture peut être du type cerclé, semi-cerclé ou encore percé. En fonction de la forme de la monture sélectionnée par le client, l'opticien détermine les formes que les lentilles ophtalmiques devront présenter pour être montables sur la monture.

L'opticien fait ensuite choisir au client le matériau de ses futures lentilles, ainsi qu'éventuellement leurs marques et leurs modèles. Il lui propose en outre différents types de traitements qu'il est possible d'appliquer à ces lentilles. Ces traitements permettent par exemple de colorer les lentilles de manière uniforme ou dégradée. Ils peuvent également permettre d'apposer sur les lentilles un traitement anti-reflet ou un traitement hydrophobe.

Enfin, l'opticien procède aux mesures nécessaires au centrage des futures lentilles ophtalmiques du client, de manière que ces lentilles puissent être correctement centrées en regard des pupilles du client afin d'exercer au mieux les fonctions optiques pour lesquelles elles sont conçues.

A cet effet, l'opticien équipe le client de la paire de lunettes de présentation sélectionnée puis procède au repérage, sur les lentilles de cette paire de lunettes de présentation, de la position des points situés en regard des pupilles du client. Ce repérage est réalisé de manière classique en déterminant la hauteur de ces points par rapport à la monture et la distance entre ces deux points. Cette mesure peut être réalisée manuellement par l'opticien ou à l'aide d'instruments tels qu'un pupillomètre ou un appareil d'acquisition et de traitement numérique d'images permettant d'identifier les positions des pupilles du client à partir d'une photo numérique du visage du client équipé des lunettes de présentation. L'opticien peut également acquérir d'autres données relatives à la morphologie du client telles que par exemple la distance séparant chaque pupille du client des faces arrières des lentilles de la paire de lunettes de présentation.

A l'issue de ces choix et mesures, l'opticien rentre l'ensemble des données acquises dans un nouvel enregistrement 105 du registre 100 de l'ordinateur hôte 6.

L'opticien enregistre en particulier dans les rubriques correspondantes de cet enregistrement 105, à l'aide de la souris 2 et du clavier 9, le nom du client, ses prescriptions, et une date de livraison de la paire de lunettes dont il convient avec le client. La donnée d'indication d'îlot de cet enregistrement se met quant à elle automatiquement à la valeur 1. Cette donnée d'indication est caractéristique de l'état d'avancement de la confection de la paire de lunettes du client. Elle indique ici que la paire de lunettes est en attente que l'opticien commande ses lentilles ophtalmiques.

Enfin, le client repartant du magasin M1, l'opticien saisit dans le premier îlot Z11 une barquette 10 vide. Il place dans cette barquette 10 la monture de présentation choisie par le client ou une monture identique à celle-ci. Il ajoute dans cette barquette 10 la fiche de prescriptions du client. Il inscrit sur une étiquette 12 le nom du client et la date de livraison de la paire de lunettes prévue, puis il insère cette étiquette 12 dans l'emplacement 11 de la barquette 10. L'opticien place alors la barquette 10 dans le deuxième îlot Z21.

La mise en oeuvre de cette deuxième étape dans un dispositif du type de celui représenté sur les figures 3 et 4 (deuxième mode de réalisation de l'invention) diffère quelque peu du procédé décrit ci-dessus.

En particulier, lorsque l'opticien saisit une barquette 20 vide dans le premier îlot Z12, il relève un numéro de référence de cette barquette 20 (qui est par exemple gravé sur cette barquette) et l'enregistre dans le nouvel enregistrement 105 du registre 100.

Ensuite, lorsque la donnée d'indication 102 du nouvel enregistrement 105 se met à la valeur 1, les troisièmes moyens de communication de l'ordinateur hôte 6 envoient aux moyens de communication 26 de la barquette 20 un signal radio comportant le numéro de référence de cette barquette (de manière à identifier la barquette qui doit traiter ce signal), la donnée d'indication d'îlot mémorisée dans la deuxième rubrique 102 et le nom mémorisé dans la première rubrique 101 de l'enregistrement 105 correspondant. Le nom 241 du client ainsi que la mention Z22, correspondant à l'îlot Z22 dans lequel est sensée être disposée la barquette 20, s'affichent alors sur l'écran d'affichage 24 de cette barquette 20.

En variante, l'ordinateur hôte 6 peut comporter en mémoire les numéros de référence de l'ensemble des barquettes 20 du magasin et de l'atelier. Dans cette variante, lorsque l'opticien enregistre un nouvel enregistrement 105 dans le registre 100, l'ordinateur hôte 6 est adapté à affecter automatiquement à ce nouvel enregistrement 105 une barquette non utilisée (qui est donc disposée dans le premier îlot Z12) et à envoyer un signal radio comportant le numéro de référence de cette barquette de manière que la diode électro-luminescente 23 de cette barquette s'illumine.

La mise en oeuvre de cette deuxième étape dans un dispositif du type de celui représenté sur les figures 5 et 6 (troisième mode de réalisation de l'invention) est facilitée grâce à la présence de la zone d'enregistrement Z03.

En effet, lorsque l'opticien saisit dans le premier îlot Z13 une barquette 30 vide, il la place dans la zone d'enregistrement Z01 ce qui permet au lecteur RFID 390 de cette zone d'enregistrement Z03 d'enregistrer dans l'élément RFID 35 de la barquette 30 le nom du client. Le nom du client s'affiche alors automatiquement sur l'écran d'affichage 34 de la barquette 30.

Puis, lorsque l'opticien place la barquette 30 dans le deuxième îlot Z23, le lecteur RFID 36 de cet îlot détecte automatiquement la présence de cette barquette. Les moyens de requête 110 reliés à ce lecteur RFID mettent alors à la valeur 1 la donnée d'indication d'îlot de la deuxième rubrique 102 de l'enregistrement 105 correspondant à cette barquette 30. La mention Z23, correspondant à l'îlot Z23 dans lequel est disposée la barquette 30, s'affiche alors sur l'écran d'affichage 34 de cette barquette.

En variante, si le magasin est dépourvu de zone d'enregistrement, l'opticien peut utiliser le lecteur RFID 36 du deuxième îlot Z23 pour enregistrer dans l'élément RFID 35 de la barquette 30 le nom du client.

En variante encore, chaque barquette 30 comportant un numéro de référence propre et invariable, l'ordinateur hôte 6 peut comporter en mémoire les numéros de référence de l'ensemble des barquettes 30 du magasin et de l'atelier. Dans cette variante, lorsque l'opticien enregistre une pluralité de nouveaux enregistrements 105 dans le registre 100, l'ordinateur hôte 6 est adapté à affecter automatiquement à ces enregistrements 105 des barquettes non utilisées (qui sont donc disposées dans le premier îlot Z13) et à générer un signal radio comportant les numéros de référence de ces barquettes pour que les diodes électro-luminescentes 33 de ces barquettes s'illuminent. L'opticien saisit alors cet ensemble de barquettes afin de pouvoir disposer les montures de lunettes et fiches de prescription des clients dans ces barquettes. Il existe plusieurs méthodes pour que l'opticien ait connaissance de quelle barquette est associée à quelle paire de lunettes. Par exemple, le signal radio émis peut comporter, outre l'identifiant de la barquette, le nom du client de manière que ce nom s'affiche sur l'écran d'affichage de la barquette afin qu'ainsi, l'opticien sache quelle monture placer dans quelle barquette.

La mise en oeuvre de cette deuxième étape dans un dispositif du type de celui représenté sur les figures 7 et 8 (quatrième mode de réalisation de l'invention) est encore différente.

En effet, lorsque l'opticien saisit dans le premier îlot Z14 une barquette 40 vide, les moyens de repérage 48, 49 des barquettes 40 repèrent le changement de position de cette barquette 40. Par conséquent, lorsque l'opticien crée dans le registre 100 un nouvel enregistrement 105, les moyens de surveillance 120 associent automatiquement ce nouvel enregistrement 105 à cette barquette 40. L'écran d'affichage 44 de cette barquette affiche alors automatiquement le nom du client mémorisé dans l'enregistrement 105 du registre 100 et la mention Z24, indiquant l'îlot Z24 dans lequel est sensée être disposée la barquette 40.

En variante, l'ordinateur hôte 6 peut ici également affecter automatiquement une barquette à un nouvel enregistrement s'il a en mémoire les numéros de référence de l'ensemble des barquettes 40 du magasin et de l'atelier.

Ici, la donnée d'indication d'îlot mémorisée dans la deuxième rubrique 102 de l'enregistrement 105 est mise manuellement à la valeur 1 par l'opticien. Les moyens de repérage 48, 49 des barquettes 40 servent alors à vérifier que la position réelle de chaque barquette 40 correspond à la donnée d'indication d'îlot de l'enregistrement correspondant. Ces moyens de repérage 48, 49 vérifient ainsi que l'opticien n'a pas fait d'erreur en rangeant la barquette dans le magasin M4.

Bien sûr, en variante, les moyens de repérage 48, 49 des barquettes 40 peuvent être utilisés pour mettre automatiquement à jour la deuxième rubrique 102 de chaque enregistrement 105 du registre 100 en fonction des positions détectées des barquettes 40.

### Etape 3 - Commande des lentilles

Au cours d'une troisième étape, l'opticien procède à la commande des lentilles ophtalmiques du client auprès du fabricant de lentilles. A cet effet, il se saisit de l'ensemble des barquettes 10 disposées dans le deuxième îlot Z21.

Différentes méthodes pour commander ces lentilles sont alors envisageables. L'opticien peut en particulier téléphoner au fabricant de lentilles pour lui soumettre oralement les prescriptions des clients inscrites sur les fiches de prescriptions contenues dans ces barquettes 10. Il peut en variante lui faxer les fiches de prescriptions contenues dans ces barquettes 10. Il peut sinon télécommander ces lentilles via une communication informatisée (mail ou réseau client). Cette commande peut alors être partiellement automatisée en récupérant les données enregistrées dans le registre. Dans ce cas, l'opticien lit le nom du client inscrit sur chaque barquette 10 puis rappelle, via les moyens d'acquisition 2, 9 et les moyens de requête 110 de l'ordinateur hôte 6, les prescriptions mémorisées dans la quatrième rubrique 104 des enregistrements 105 correspondants du registre 100 (les moyens d'acquisition 2, 9 forment alors ici des moyens dits de commande de lentilles).

Quoi qu'il en soit, une fois les commandes réalisées, l'opticien dispose les barquettes 10 dans le troisième îlot Z31 et modifie manuellement les valeurs des données d'indication d'îlot mémorisées dans la deuxième rubrique 102 des enregistrements 105 correspondants pour les mettre à la valeur 2. La donnée d'indication d'îlot indique alors ici que la paire de lunettes correspondante est en attente de la réception de ses lentilles ophtalmiques.

Dans le deuxième mode de réalisation de l'invention représenté sur les figures 3 et 4, la modification de la donnée d'indication d'un enregistrement 105 est automatiquement suivie de l'envoi aux moyens de communication 26 de la barquette 20 correspondante d'un signal comprenant le nom et la donnée d'indication d'îlot mémorisés dans cet enregistrement. L'écran d'affichage 24 peut ainsi afficher la mention Z32 indiquant à l'opticien le nom de l'îlot Z32 dans lequel est sensée être disposée cette barquette 20.

Dans le quatrième mode de réalisation de l'invention représenté sur les figures 7 et 8, lorsque la commande est effectuée, l'opticien modifie manuellement, à l'aide des moyens d'acquisition 2, 9, la donnée d'indication d'îlot de l'enregistrement 105 correspondant. Cette modification est ici également suivie de l'envoi aux moyens de communication 46 de la barquette 40 correspondante d'un signal comprenant le nom et la donnée d'indication d'îlot mémorisés dans cet enregistrement, pour que son écran d'affichage 44 affiche la mention Z34. Les moyens de surveillance 120 et de repérage 48, 49 vérifient quant à eux que l'opticien place correctement la barquette 40 dans le troisième îlot Z34. Si ce n'est pas le cas, ils commandent l'illumination de la diode électro-luminescente 43 de cette barquette 40 jusqu'à ce que l'opticien la replace dans l'îlot Z34.

Bien sûr, en variante, les moyens de repérage 48, 49 des barquettes 40 peuvent être utilisés pour mettre automatiquement à jour la deuxième rubrique 102 de chaque enregistrement 105 en fonction des positions détectées des barquettes 40.

La mise en oeuvre de cette troisième étape dans un dispositif du type de celui représenté sur les figures 5 et 6 (troisième mode de réalisation de l'invention) est ici aussi facilitée par la présence des lecteurs RFID.

En effet, après s'être saisi de l'ensemble des barquettes 30 disposées dans le deuxième îlot Z23, l'opticien place ces barquettes les unes à la suite des autres dans la zone d'enregistrement Z03, ce qui permet au lecteur RFID 390 de lire les noms enregistrés dans les éléments RFID 35 de ces barquettes 30. Les moyens de requête 110 recherchent alors les prescriptions mémorisées dans les enregistrements 105 dont les noms correspondent, puis ils les transmettent automatiquement par mail au fabricant de lentilles.

Une fois les commandes de lentilles réalisées, l'opticien dispose ces barquettes 30 dans le troisième îlot Z33. Le lecteur RFID 37 de cet îlot détecte automatiquement la présence de ces barquettes. Les moyens de requête 110 reliés à ce lecteur RFID mettent alors à la valeur 2 les données d'indication d'îlot mémorisées dans la deuxième rubrique 102 des enregistrements 105 correspondants. La mention Z33, identifiant l'îlot Z33 dans lequel sont disposées ces barquettes 30, s'affiche alors sur les écrans d'affichage 34 de ces barquettes.

### Etape 4 - Réception des lentilles ophtalmiques commandées

Au cours d'une quatrième étape, l'opticien reçoit du fabricant une paire de lentilles disposée dans une pochette de protection sur laquelle est collée une étiquette munie d'un code-barres. Ces lentilles sont non détourées et sont destinées à être assemblées avec l'une des monture qui sont disposées dans les barquettes 10 situées dans le troisième îlot Z31.

L'opticien passe alors ce code-barres en regard du lecteur de code-barres 3 de l'ordinateur hôte 6 (le lecteur de code-barres forme alors ici un moyen dit de réception de lentilles). Les informations contenues dans ce code-barres indiquent les pouvoirs de réfringence des lentilles contenues dans la pochette de protection. Ces pouvoirs de réfringence sont conformes à des prescriptions enregistrées dans un des enregistrements 105 du registre 100.

Les moyens de requête 110 recherchent alors cet enregistrement 105 puis commandent l'affichage, sur l'écran 8 de l'ordinateur hôte 6, du nom 101 mémorisé dans cet enregistrement 105. Si plusieurs enregistrements sont trouvés, le logiciel sélectionne celui dont la date de livraison est la plus proche de la date du jour.

L'opticien peut alors rechercher, parmi les barquettes 10 situées dans le troisième îlot Z31, celle dont l'étiquette 12 porte le nom correspondant. Une fois cette barquette 10 trouvée, l'opticien dispose la paire de lentilles dans cette barquette puis positionne cette barquette 10 dans le quatrième îlot Z41. Il modifie ensuite manuellement, à l'aide des moyens d'acquisition 2, 9 de l'ordinateur hôte 6, la valeur de la donnée d'indication d'îlot de l'enregistrement 105 pour la mettre à la valeur 3. Cette donnée indique que la paire de lunettes correspondante est en attente que l'opticien usine ses lentilles et les monte sur sa monture.

Dans le deuxième mode de réalisation de l'invention représenté sur les figures 3 et 4, la modification de la donnée d'indication d'îlot de l'enregistrement 105 est automatiquement suivie de l'envoi aux moyens de communication 26 de la barquette 20 correspondante d'un signal comprenant le nom et la donnée d'indication mémorisés dans l'enregistrement modifié. A la réception de cette donnée, l'écran d'affichage 24 de cette barquette 20 affiche la mention Z42 tandis que sa diode électro-luminescente 23 s'illumine durant un laps de temps prédéterminé. La recherche de la barquette 20 parmi les barquettes situées dans le troisième îlot Z32 est ainsi facilitée.

Dans le quatrième mode de réalisation de l'invention représenté sur les figures 7 et 8, lorsque l'enregistrement 105 correspondant à la paire de lentilles reçue est trouvé, l'opticien modifie manuellement, à l'aide des moyens d'acquisition 2, 9, la donnée d'indication d'îlot de cet enregistrement 105. Cette modification est ici également suivie de l'envoi aux moyens de communication 46 de la barquette 40 correspondante d'un signal comprenant le nom et la donnée d'indication mémorisés dans l'enregistrement modifié, pour que son écran d'affichage 44 affiche la mention Z44 et que sa diode électro-luminescente 43 s'illumine. Les moyens de surveillance 120 et de repérage 48, 49 vérifient quant à eux que l'opticien place correctement la barquette 40 dans le quatrième îlot Z44.

Bien sûr, en variante, les moyens de repérage 48, 49 des barquettes 40 peuvent être utilisés pour mettre automatiquement à jour la deuxième rubrique 102 de chaque enregistrement 105 en fonction des positions détectées des barquettes 40.

La mise en oeuvre de cette quatrième étape dans un dispositif du type de celui représenté sur les figures 5 et 6 (troisième mode de réalisation de l'invention) est ici encore facilitée par la présence des lecteurs RFID.

En effet, une fois que l'enregistrement 105 correspondant à la paire de lentilles reçue est trouvé, l'ensemble des lecteurs RFID 36, 37, 38, 39 recherchent la barquette 30 correspondant à cet enregistrement. Le lecteur RFID qui repère la barquette 30 commande alors, via l'élément RFID 35 de cette barquette 30, l'illumination de la diode électro-luminescente 33 de cette barquette. Ainsi, même si la barquette 30 n'est pas positionnée dans l'îlot dans lequel elle est sensée se trouver (le troisième îlot Z33), l'opticien peut facilement retrouver cette barquette et y insérer la paire de lentilles reçue.

Puis, l'opticien dispose cette barquette 30 dans le quatrième îlot Z43. Le lecteur RFID 38 de cet îlot détecte automatiquement la présence de cette barquette. Les moyens de requête 110 reliés à ce lecteur RFID mettent alors à la valeur 3 la donnée d'indication d'îlot de l'enregistrement 105 correspondant à cette barquette 30. La mention Z43, identifiant l'îlot Z43 dans lequel est disposée la barquette 30, s'affiche alors sur l'écran d'affichage 34 de cette barquette.

### Etape 5 - Usinage des lentilles ophtalmiques

Au cours d'une cinquième étape, l'opticien lance une recherche dans la base de données afin de déterminer quelles sont les barquettes 10 situées dans le quatrième îlot Z41 dont les paires de lunettes doivent être prochainement livrées, par exemple le lendemain.

A cet effet, les moyens de requête 110 recherchent, parmi les enregistrements 105 du registre 100, ceux dont la date de livraison mémorisée dans la troisième rubrique 103 correspond à la date du lendemain. Les moyens de requête 110 commandent alors l'affichage, sur l'écran 8 de l'ordinateur hôte 6, des noms mémorisés dans ces enregistrements 105. L'opticien peut alors saisir, parmi les barquettes 10 situées dans le quatrième îlot Z41, celles dont les étiquettes 12 portent les noms affichés sur l'écran 8.

Grâce aux deuxièmes moyens de communication de l'ordinateur hôte 6, l'unité de centrage 4 et l'unité de détourage et de perçage 5 sont adaptées à récupérer, pour chaque paire de lentilles, les prescriptions du client auxquelles les lentilles sont destinées. A cet effet, l'opticien acquiert sur les moyens d'acquisition de l'ordinateur hôte 6 (ou sur des moyens d'acquisition propres à l'une et/ou à l'autre des unités) le nom du client. L'unité de centrage 4 et l'unité de détourage et de perçage 5 récupèrent ainsi en particulier les distances pupillaires mesurées sur le client, les formes des contours des lentilles selon lesquels il faut les détourer, ainsi que les traitements qu'elles ont subis chez le fabricant. Cette dernière information permet par exemple, si les lentilles ont subi un traitement hydrophobe, de prévoir de les détourer à sec de manière à ne pas dégrader l'efficacité de ce traitement.

Puis, dans un premier temps, l'opticien dispose chaque lentille dans l'unité de centrage 4 . Cette dernière définit alors les paramètres de centrage de cette lentille en fonction des informations récupérées dans le registre 100, puis elle procède à la pose d'un gland de blocage sur l'une des faces de cette lentille en fonction des paramètres de centrage. Suite à la pose du gland, l'unité de centrage 4 envoie, via les deuxièmes moyens de communication de l'ordinateur hôte 6, une information de validation de l'étape de centrage de manière que la donnée d'indication d'îlot de l'enregistrement 105 correspondant passe automatiquement de la valeur 3 à la valeur 4.

Dans un deuxième temps, l'opticien bloque l'une des deux lentilles dans l'unité de détourage et de perçage 5, dans une position qui est fonction de la position du gland sur la lentille. Puis, l'unité de détourage et de perçage 5 procède au détourage et éventuellement au perçage de chaque lentille de manière que cette lentille soit assemblable avec la monture sélectionnée par le client. L'opticien procède ensuite de la même manière avec la deuxième lentille. Une fois les deux lentilles détourées (et éventuellement percées), le dispositif de détourage et de perçage 5 envoie une information de validation de l'étape d'usinage de manière que la donnée d'indication d'îlot de l'enregistrement 105 correspondant passe automatiquement de la valeur 4 à la valeur 5. A l'issue de ce détourage, l'opticien assemble les lentilles ophtalmiques détourées avec la monture sélectionnée par le client.

Éventuellement, si l'atelier A1 comporte un dispositif de contrôle (non représenté), l'opticien place dans un troisième temps la paire de lunettes assemblée dans ce dispositif de contrôle, de manière que ce dernier puisse vérifier que les lentilles usinées présentent des caractéristiques géométriques et optiques qui correspondent bien aux prescriptions mémorisées dans l'enregistrement 105 correspondant du registre 100. Les hauteurs pupillaires et les demi écarts pupillaires sont en particulier contrôlés afin de vérifier qu'ils sont égaux, sinon proches des valeurs prescrites. Le dispositif de contrôle, lorsque les caractéristiques correspondent aux prescriptions, envoie une information de validation de l'étape de contrôle de manière que la donnée d'indication d'îlot de l'enregistrement 105 passe automatiquement de la valeur 5 à la valeur 6. Dans le cas contraire, le dispositif de contrôle commande l'affichage d'un message d'alerte sur l'écran 8 de l'ordinateur hôte 6.

A l'issue de ce contrôle, l'opticien place la paire de lunettes ainsi contrôlée dans la barquette 10 correspondante. La barquette est ensuite placée dans le cinquième îlot Z51, en attente que le client vienne récupérer sa paire de lunettes.

Selon une variante non représentée de l'invention, l'atelier peut comporter un îlot intermédiaire situé entre son unité de détourage et de perçage et son dispositif de contrôle. Cet îlot intermédiaire peut alors permettre à l'opticien de mettre en attente les paires de lunettes à contrôler.

Dans les deuxième et quatrième modes de réalisation de l'invention représentés sur les figures 3 et 7, la modification de la donnée d'indication d'îlot de l'enregistrement 105, suite au centrage, à l'usinage et au contrôle des lentilles, est à chaque fois suivie de l'envoi aux moyens de communication 26, 46 de la barquette 20, 40 correspondante d'un signal comprenant le nom et la donnée d'indication 102 mémorisés dans l'enregistrement 105 modifié. A la réception de ces données, l'écran d'affichage 24, 44 de la barquette correspondante affiche respectivement les mentions « centrage OK», puis « usinage OK» et enfin « contrôle OK ».

Lors de la mise en oeuvre de cette cinquième étape dans un dispositif du type de celui représenté sur les figures 5 et 6 (troisième mode de réalisation de l'invention), les données affichées sur l'écran d'affichage 34 de la barquette 30 changent uniquement lorsque le lecteur RFID 39 du cinquième îlot Z53 détecte la présence de cette barquette dans cet îlot Z53. Ainsi, lorsque la barquette 30 est détectée dans cet îlot Z53, les moyens de requête 110 reliés au lecteur RFID 39 commandent, via l'élément RFID 35 de cette barquette 30, l'affichage de la mention Z53 sur l'écran d'affichage 34.

En variante, si les unités de centrage et de détourage ainsi que le dispositif de contrôle sont pourvus de lecteurs RFID, la détection d'une barquette 30 dans l'un ou l'autre de ces dispositifs et unités permet de mettre à jour la donnée d'indication d'îlot de l'enregistrement 105 correspondant. L'ordinateur hôte 6 peut alors commander, via ces lecteurs RFID, l'affichage, sur l'écran d'affichage 34 de la barquette correspondante, des mentions « centrage OK», puis « usinage OK» et enfin « contrôle OK ».

### Etape 6 - Livraison de la paire de lunettes

Au cours d'une sixième et dernière étape, le client revient dans le magasin M1 pour récupérer sa paire de lunettes. L'opticien demande alors au client son nom puis recherche, à l'aide des moyens d'acquisition 2, 9 et de requête 110 de l'ordinateur hôte 6, l'enregistrement 105 ayant ce nom en mémoire. L'opticien vérifie ainsi que la barquette 10 correspondante est disposée dans le cinquième îlot Z51, ce qui signifie que la confection de la paire de lunettes du client est achevée et que cette paire de lunettes est prête à être livrée.

Puis, l'opticien recherche, à l'aide du nom du client, la barquette 10 correspondante dans le cinquième îlot Z51 et présente au client sa monture de lunettes pour qu'il l'essaie. L'opticien procède enfin à l'effacement de l'enregistrement 105 correspondant du registre 100 et il replace la barquette 10 correspondante dans le premier îlot Z11.

Dans les deuxième, troisième et quatrième modes de réalisation de l'invention représentés sur les figures 3 à 8, la recherche de la barquette est facilitée puisque les moyens de requête 110 peuvent commander l'illumination de la diode électro-luminescente de cette barquette.

La présente invention n'est nullement limitée aux modes de réalisation décrits et représentés, mais l'homme du métier saura y apporter toute variante conforme à son esprit.

En particulier, si le client commande non pas une paire de lunettes mais des lentilles de contact, le dispositif et le procédé utilisés sont équivalents. La principale différence réside dans le fait que lorsque l'opticien reçoit les lentilles de contact commandées, il recherche dans le troisième îlot la barquette correspondant à ces lentilles, il place les lentilles dans cette barquette, puis il dispose cette barquette non pas dans le quatrième îlot mais directement dans le cinquième îlot.

## Revendications

1. Dispositif d'assistance (1) à la commande et à la confection de paires de lunettes, **caractérisé en ce qu'**il comporte :
- une pluralité de barquettes (10 ; 20 ; 30 ; 40) conçues pour accueillir chacune une paire de lunettes en cours de confection,
- une pluralité d'îlots (Z11, Z21, Z31, Z41, Z51 ; Z12, Z22, Z32, Z42, Z52 ; Z13, Z23, Z33, Z43, Z53 ; Z14, Z24, Z34, Z44, Z54) regroupant un ensemble de barquettes (10 ; 20 ; 30 ; 40) dont les paires de lunettes sont sensées être au même stade de confection,
- un ordinateur hôte (6) sur lequel est hébergé un registre (100) dont chaque enregistrement (105) est associé à une paire de lunettes en cours de confection et comprend, dans un ordre quelconque, d'une part, une première rubrique (101) pour une donnée d'identification de ladite paire de lunettes en cours de confection, et, d'autre part, une deuxième rubrique (102) pour une donnée d'indication de l'îlot (Z11, Z21, Z31, Z41, Z51 ; Z12, Z22, Z32, Z42, Z52 ; Z13, Z23, Z33, Z43, Z53 ; Z14, Z24, Z34, Z44, Z54) dans lequel est sensée être disposée la barquette (10 ; 20 ; 30 ; 40) d'accueil de ladite paire de lunettes en cours de confection,
- un logiciel de gestion de ce registre (100) qui est installé sur cet ordinateur hôte (6) ou sur un autre ordinateur communiquant avec cet ordinateur hôte (6) et qui comporte des moyens de requête (110) adaptés à émettre dans le registre (100) une requête sur l'une et/ou l'autre desdites première et deuxième rubriques (101, 102),
- une unité de centrage (4) de lentilles ophtalmiques adaptée à délivrer un signal représentatif de l'accomplissement du centrage de chaque ou des deux lentilles d'une paire de lunettes, et/ou une unité de détourage (5) de lentilles ophtalmiques adaptée à délivrer un signal représentatif de l'accomplissement du détourage de chaque ou des deux lentilles d'une paire de lunettes, lesdites unité de centrage (4) et de détourage (5) étant en outre adaptées à délivrer un signal représentatif d'un identifiant de chaque paire de lunettes traitée par l'unité considérée,
- des premiers moyens d'indication d'état adaptés à délivrer, pour chaque paire de lunettes, un signal représentatif d'un premier indicateur d'état indiquant un stade de commande ou de confection de chaque paire de lunettes, et des seconds moyens d'indication d'état adaptés à délivrer, pour chaque paire de lunettes, un signal représentatif d'un second indicateur d'état indiquant une localisation matérielle de chaque barquette (30 ; 40), lesdits premiers moyens d'indication d'état comportant des moyens de localisation matérielle (35, 36, 37, 38, 39 ; 45, 46, 47, 48, 49) aptes à identifier les barquettes (30 ; 40) matériellement présentes dans chaque îlot (Z13, Z23, Z33, Z43, Z53 ; Z14, Z24, Z34, Z44, Z54) et à délivrer un signal représentatif d'un identifiant de chaque barquette et de l'îlot dans lequel elle se trouve,
- un script de mise à jour (130) qui est installé sur l'ordinateur hôte (6) hébergeant le registre (100) ou sur un autre ordinateur communiquant avec ce dernier et qui est apte à mettre à jour la valeur de la donnée d'indication d'îlot de la deuxième rubrique (102) de chaque enregistrement (105) du registre (100), en fonction du signal délivré par lesdits moyens d'indication d'état et en fonction du signal délivré par l'unité de centrage et/ou par l'unité de détourage (5), et
- des moyens pour contrôler, pour chaque paire de lunettes, la cohérence entre les deux indicateurs d'état précités.

2. Dispositif selon la revendication précédente, comportant une ou plusieurs des unités de commande et/ou de confection de paires de lunettes suivantes :
- des moyens de commande (2,9) de lentilles ophtalmiques adaptés à délivrer un signal représentatif de l'accomplissement de la commande des lentilles d'une paire de lunettes, et
- des moyens de réception (3) de lentilles ophtalmiques adaptés à délivrer un signal représentatif de la réception des lentilles d'une paire de lunettes, et
dans lequel le script de mise à jour (130) est apte à mettre à jour la valeur de la donnée d'indication d'îlot de la deuxième rubrique (102) de chaque enregistrement (105) dont la valeur de la donnée d'identification de la première rubrique (101) correspond à l'identifiant de chaque paire de lunettes (10 ; 20 ; 30 ; 40) traitée par les moyens de commande (2,9) ou par les moyens de réception (3).

3. Dispositif selon l'une des revendications précédentes, dans lequel le script de mise à jour (130) est apte à mettre à jour la valeur de la donnée d'indication d'îlot de la deuxième rubrique (102) de chaque enregistrement (105) dont la valeur de la donnée d'identification de la première rubrique (101) correspond à l'identifiant de chaque barquette (10 ; 20 ; 30 ; 40) ainsi localisée.

4. Dispositif selon la revendication précédente, dans lequel les moyens de localisation matérielle comportent, attaché à chaque barquette (30), un organe de radio-identification (35) de la barquette (30) concernée, et, associé à l'un au moins des îlots (Z23, Z33, Z43, Z53), un lecteur de radio-identifiant (36, 37, 38, 39) adapté à détecter, en coopération avec lesdits organes de radio-identification (35), les barquettes (30) situées dans un périmètre donné du lecteur de radio-identifiant (36, 37, 38, 39) correspondant à l'îlot (Z23, Z33, Z43, Z53) concerné.

5. Dispositif selon la revendication 3, dans lequel les moyens de localisation matérielle comportent :
- des moyens de radio-repérage (48, 49) de la position de chaque barquette (40) dans un référentiel global donné,
- une cartographie référençant la position de chaque îlot (Z14, Z24, Z34, Z44, Z54) dans le référentiel global, et
- des moyens pour identifier, à partir de ladite cartographie et de ladite position de la barquette (40), l'îlot dans lequel est située cette barquette (40).

6. Dispositif selon l'une des revendications précédentes, dans lequel :
- l'ordinateur hôte (6) hébergeant le registre (100) ou un autre ordinateur communiquant avec ce dernier comporte des moyens de communication avec chaque barquette (20 ; 30 ; 40) pour délivrer un signal représentatif d'un identifiant de chaque barquette et d'au moins la valeur de la donnée de l'une des rubriques (101, 102, 103, 104) de l'enregistrement (105) correspondant à cette barquette (20 ; 30 ; 40), et
- les barquettes comportent des moyens de réception (26, 35, 46) pour recevoir et interpréter ce signal et des moyens d'affichage (23, 24 ; 33, 34 ; 43, 44) pour afficher, si l'identifiant correspond à la barquette, une information correspondant à la valeur de la donnée reçue.

7. Dispositif selon la revendication précédente, dans lequel les moyens d'affichage (23 ; 33 ; 43) comportent une diode électro-luminescente et/ou un écran d'affichage.

8. Dispositif selon l'une des revendications précédentes, dans lequel chaque enregistrement (105) du registre (100) comporte une troisième rubrique (103) pour une donnée relative à la date de livraison prévue pour la paire de lunettes correspondant à cet enregistrement (105).

9. Dispositif selon la revendication précédente, comportant un script de surveillance (120) qui est installé sur l'ordinateur hôte (6) hébergeant le registre (100) ou sur un autre ordinateur communiquant avec ce dernier, pour rechercher les enregistrements (105) du registre (100) dont la valeur de la donnée de date de livraison de la troisième rubrique (103) s'écarte d'une donnée globale de même nature relative à une date courante, telle que la date du jour, d'un laps de temps inférieur à un délai minimum qui est prédéterminé et qui est associé à la valeur de la donnée d'indication d'îlot de la deuxième rubrique (102) de l'enregistrement (105) concerné.

10. Dispositif selon l'une des revendications précédentes, dans lequel chaque enregistrement (105) du registre (100) comporte une quatrième rubrique (104) pour une donnée relative aux prescriptions d'un futur porteur de la paire de lunettes correspondant à cet enregistrement (105).

## Patentansprüche

1. Hilfsvorrichtung (1) für die Bestellung und für die Herstellung von Brillen, **dadurch gekennzeichnet, dass** sie umfasst:
- mehrere Trays (10; 20; 30; 40), die dafür ausgebildet sind, jeweils eine in der Herstellung begriffene Brille aufzunehmen,
- mehrere Stapelinseln (Z11, Z21, Z31, Z41, Z51; Z12, Z22, Z32, Z42, Z52; Z13, Z23, Z33, Z43, Z53; Z14, Z24, Z34, Z44, Z54), in denen jeweils eine Menge von Trays (10; 20; 30; 40) vereinigt ist, deren Brillen sich im gleichen Stadium der Herstellung befinden sollen;
- einen Hostcomputer (6), auf dem ein Verzeichnis (100) gehostet wird, in dem jeder Eintrag (105) einer in der Herstellung begriffenen Brille zugeordnet ist und, in einer beliebigen Reihenfolge, einerseits eine erste Rubrik (101) für eine Identifizierungsangabe dieser in der Herstellung begriffenen Brille und andererseits eine zweite Rubrik (102) für eine Anzeigeangabe der Stapelinsel (Z11, Z21, Z31, Z41, Z51; Z12, Z22, Z32, Z42, Z52; Z13, Z23, Z33, Z43, Z53; Z14, Z24, Z34, Z44, Z54), in welcher der Tray (10; 20; 30; 40) zur Aufnahme der in der Herstellung begriffenen Brille angeordnet sein soll, umfasst,
- eine Software zur Verwaltung dieses Verzeichnisses (100), welche auf diesem Hostcomputer (6) oder auf einem anderen Computer, der mit diesem Hostcomputer (6) kommuniziert, installiert ist und welche Anfragemittel (110) umfasst, die dafür ausgelegt sind, in dem Verzeichnis (100) eine Anfrage für die erste und/oder die zweite Rubrik (101, 102) zu senden,
- eine Einheit zur Zentrierung (4) ophthalmischer Linsen, die dafür ausgelegt ist, ein Signal zu liefern, das für die Ausführung der Zentrierung einer oder beider Linsen einer Brille repräsentativ ist, und/oder eine Einheit zum Zuschneiden (5) ophthalmischer Linsen, die dafür ausgelegt ist, ein Signal zu liefern, das für die Ausführung des Zuschneidens einer oder beider Linsen einer Brille repräsentativ ist, wobei die Zentriereinheit (4) und die Zuschneideeinheit (5) außerdem dafür ausgelegt sind, ein Signal zu liefern, das für eine Kennung der jeweiligen Brille, die von der betreffenden Einheit bearbeitet wird, repräsentativ ist,
- erste Zustandsanzeigemittel, die dafür ausgelegt sind, für jede Brille ein Signal zu liefern, das für einen ersten Zustandsindikator repräsentativ ist, der ein Bestell- oder Herstellungsstadium der jeweiligen Brille anzeigt, und zweite Zustandsanzeigemittel, die dafür ausgelegt sind, für jede Brille ein Signal zu liefern, das für einen zweiten Zustandsindikator repräsentativ ist, der einen physischen Ort des jeweiligen Trays (30, 40) anzeigt, wobei die ersten Zustandsanzeigemittel Mittel zur physischen Lokalisierung (35, 36, 37, 38, 39; 45, 46, 47, 48, 49) umfassen, die in der Lage sind, die Trays (30; 40) zu identifizieren, die in jeder Stapelinsel (Z13, Z23, Z33, Z43, Z53; Z14, Z24, Z34, Z44, Z54) physisch vorhanden sind, und ein Signal zu liefern, das für eine Kennung des jeweiligen Trays und der Stapelinsel, in der er sich befindet, repräsentativ ist,
- ein Aktualisierungsskript (130), welches auf dem Hostcomputer (6), der das Verzeichnis (100) hostet, oder auf einem anderen Computer, der mit diesem Letzteren kommuniziert, installiert ist und welches in der Lage ist, den Wert der Stapelinsel-Anzeigeangabe der zweiten Rubrik (102) jedes Eintrags (105) des Verzeichnisses (100) in Abhängigkeit von dem Signal, das von den Zustandsanzeigemitteln geliefert wird, und in Abhängigkeit von dem Signal, das von der Zentriereinheit und/oder von der Zuschneideeinheit (5) geliefert wird, zu aktualisieren, und
- Mittel zum Kontrollieren, für jede Brille, der Kohärenz zwischen den zwei oben genannten Zustandsindikatoren.

2. Vorrichtung nach dem vorhergehenden Anspruch, welche eine oder mehrere der folgenden Einheiten zur Bestellung und/oder Herstellung von Brillen umfasst:
- Mittel zur Bestellung (2, 9) ophthalmischer Linsen, die dafür ausgelegt sind, ein Signal zu liefern, das für die Ausführung der Bestellung der Linsen einer Brille repräsentativ ist,
- Mittel zum Empfang (3) ophthalmischer Linsen, die dafür ausgelegt sind, ein Signal zu liefern, das für den Empfang der Linsen einer Brille repräsentativ ist, und
wobei das Aktualisierungsskript (130) in der Lage ist, den Wert der Stapelinsel-Anzeigeangabe der zweiten Rubrik (102) jedes Eintrags (105) zu aktualisieren, dessen Wert der Identifizierungsangabe der ersten Rubrik (101) der Kennung jeder Brille (10; 20; 30; 40) entspricht, die von den Bestellmitteln (2, 9) oder von den Empfangsmitteln (3) bearbeitet wird.

3. Vorrichtung nach einem der vorhergehenden Ansprüche, wobei das Aktualisierungsskript (130) in der Lage ist, den Wert der Stapelinsel-Anzeigeangabe der zweiten Rubrik (102) jedes Eintrags (105) zu aktualisieren, dessen Wert der Identifizierungsangabe der ersten Rubrik (101) der Kennung jedes so lokalisierten Trays (10; 20; 30; 40) entspricht.

4. Vorrichtung nach dem vorhergehenden Anspruch, wobei die Mittel zur physischen Lokalisierung ein an jedem Tray (30) angebrachtes Element zur Funkfrequenzidentifizierung (35) des betreffenden Trays (30) umfassen, und, zugeordnet zu wenigstens einer der Stapelinseln (Z23, Z33, Z43, Z53), ein RFID-Lesegerät (36, 37, 38, 39), das dafür ausgelegt ist, im Zusammenwirken mit den Elementen zur Funkfrequenzidentifizierung (35) die Trays (30) zu detektieren, die sich in einem gegebenen Umkreis des RFID-Lesegerätes (36, 37, 38, 39) befinden, das der betreffenden Stapelinsel (Z23, Z33, Z43, Z53) entspricht.

5. Vorrichtung nach Anspruch 3, wobei die Mittel zur physischen Lokalisierung umfassen:
- Mittel zur Funkortung (48, 49) der Position jedes Trays (40) in einem gegebenen globalen Koordinatensystem,
- eine Kartographie, in der die Position jeder Stapelinsel (Z14, Z24, Z34, Z44, Z54) in dem globalen Koordinatensystem verzeichnet ist, und
- Mittel zum Identifizieren, anhand der Kartographie und der Position des Trays (40), der Stapelinsel, in der sich dieser Tray (40) befindet.

6. Vorrichtung nach einem der vorhergehenden Ansprüche, wobei:
- der Hostcomputer (6), der das Verzeichnis (100) hostet, oder ein anderer Computer, der mit diesem Letzteren kommuniziert, Mittel zur Kommunikation mit jedem Tray (20; 30; 40) umfasst, um ein Signal zu liefern, das für eine Kennung des jeweiligen Trays und wenigstens den Wert der Angabe einer der Rubriken (101, 102, 103, 104) des Eintrags (105), der diesem Tray (20; 30; 40) entspricht, repräsentativ ist, und
- die Trays Empfangsmittel (26, 35, 46), um dieses Signal zu empfangen und zu interpretieren, und Anzeigemittel (23, 24; 33, 34; 43, 44), um, falls die Kennung dem Tray entspricht, eine dem Wert der empfangenen Angabe entsprechende Information anzuzeigen, umfassen.

7. Vorrichtung nach dem vorhergehenden Anspruch, wobei die Anzeigemittel (23; 33; 43) eine Leuchtdiode und/oder einen Anzeigebildschirm umfassen.

8. Vorrichtung nach einem der vorhergehenden Ansprüche, wobei jeder Eintrag (105) des Verzeichnisses (100) eine dritte Rubrik (103) für eine Angabe umfasst, die sich auf den vorgesehenen Liefertermin für die diesem Eintrag (105) entsprechende Brille bezieht.

9. Vorrichtung nach dem vorhergehenden Anspruch, welche ein Überwachungsskript (120) umfasst, welches auf dem Hostcomputer (6), der das Verzeichnis (100) hostet, oder auf einem anderen Computer, der mit diesem Letzteren kommuniziert, installiert ist, um die Einträge (105) des Verzeichnisses (100) zu suchen, deren Wert der Lieferterminangabe der dritten Rubrik (103) von einer globalen Angabe derselben Art, die sich auf ein aktuelles Datum bezieht, wie etwa das Datum des Tages, um eine Zeitspanne abweicht, die kleiner als eine minimale Frist ist, welche vorbestimmt ist und welche dem Wert der Stapelinsel-Anzeigeangabe der zweiten Rubrik (102) des betreffenden Eintrags (105) zugeordnet ist.

10. Vorrichtung nach einem der vorhergehenden Ansprüche, wobei jeder Eintrag (105) des Verzeichnisses (100) eine vierte Rubrik (104) für eine Angabe umfasst, welche sich auf die ärztlichen Verordnungen eines zukünftigen Trägers der Brille bezieht, die diesem Eintrag (105) entspricht.

## Claims

1. Device (1) for assisting in the ordering and in the manufacture of pairs of spectacles, **characterized in that** it includes:
- a plurality of tubs (10; 20; 30; 40) that are designed to each accommodate a pair of spectacles in the process of being manufactured;
- a plurality of islands (Z11, Z21, Z31, Z41, Z51; Z12, Z22, Z32, Z42, Z52; Z13, Z23, Z33, Z43, Z53; Z14, Z24, Z34, Z44, Z54) containing a set of tubs (10; 20; 30; 40) the pairs of spectacles of which are supposed to be at the same stage of manufacture;
- a host computer (6) on which is hosted a register (100), each record (105) of which is associated with a pair of spectacles in the process of being manufactured and comprises, in any order, on the one hand, a first field (101) for an identifying datum identifying said pair of spectacles in the process of being manufactured, and, on the other hand, a second field (102) for an island-indicating datum indicating the island (Z11, Z21, Z31, Z41, Z51; Z12, Z22, Z32, Z42, Z52; Z13, Z23, Z33, Z43, Z53; Z14, Z24, Z34, Z44, Z54) in which the tub (10; 20; 30; 40) accommodating said pair of spectacles in the process of being manufactured is supposed to be located;
- a piece of software for managing this register (100), which is installed on this host computer (6) or on another computer communicating with this host computer (6), and which includes requesting means (110) that are suitable for making, to the register (100), a request for one and/or both of said first and second fields (101, 102);
- a unit (4) for centring ophthalmic lenses, which unit is suitable for delivering a signal representative of the accomplishment of the centring of each or of both lenses of a pair of spectacles, and/or a unit (5) for edging ophthalmic lenses, which unit is suitable for delivering a signal representative of the accomplishment of the edging of each or of both lenses of a pair of spectacles, said centring unit (4) and edging unit (5) furthermore being suitable for delivering a signal representative of an identifier of each pair of spectacles processed by the unit in question;
- first state-indicating means that are suitable for delivering, for each pair of spectacles, a signal representative of a first state indicator indicating an order stage or manufacture stage of each pair of spectacles, and second state-indicating means that are suitable for delivering, for each pair of spectacles, a signal representative of a second state indicator indicating a physical location of each tub (30; 40), said first state-indicating means including physical-location-determining means (35, 36, 37, 38, 39; 45, 46, 47, 48, 49) that are suitable for identifying the tubs (30; 40) physically present in each island (Z13, Z23, Z33, Z43, Z53; Z14, Z24, Z34, Z44, Z54) and for delivering a signal representative of an identifier of each tub and of the island in which the latter is located;
- an updating script (130) that is installed on the host computer (6) hosting the register (100) or on another computer communicating with the latter and that is able to update the value of the island-indicating datum of the second field (102) of each record (105) of the register (100), depending on the signal delivered by said state-indicating means and depending on the signal delivered by the centring unit and/or by the edging unit (5); and
- means for checking, for each pair of spectacles, the consistency between the two aforementioned state indicators.

2. Device according to the preceding claim, including one or more of the following units for ordering and/or manufacturing pairs of spectacles:
- means (2, 9) for ordering ophthalmic lenses, said means being suitable for delivering a signal representative of the accomplishment of the order of the lenses of a pair of spectacles; and
- means (3) for receiving ophthalmic lenses, said means being suitable for delivering a signal representative of the reception of the lenses of a pair of spectacles; and
wherein the updating script (130) is able to update the value of the island-indicating datum of the second field (102) of each record (105) the value of the identifying datum of the first field (101) of which corresponds to the identifier of each pair of spectacles (10; 20; 30; 40) processed by the ordering means (2, 9) or by the receiving means (3).

3. Device according to one of the preceding claims, wherein the updating script (130) is able to update the value of the island-indicating datum of the second field (102) of each record (105) the value of the identifying datum of the first field (101) of which corresponds to the identifier of each tub (10; 20; 30; 40) thus located.

4. Device according to the preceding claim, wherein the physical-location-determining means include, attached to each tub (30), a radio-identifying component (35) for identifying the tub (30) in question, and, associated with a least one of the islands (Z23, Z33, Z43, Z53), a radio-identifier reader (36, 37, 38, 39) that is suitable for detecting, in cooperation with said radio-identifying components (35), the tubs (30) that are located in a given perimeter of the radio-identifier reader (36, 37, 38, 39) corresponding to the island (Z23, Z33, Z43, Z53) in question.

5. Device according to Claim 3, wherein the physical-location-determining means include:
- radio-locating means (48, 49) for locating the position of each tub (40) in a given overall frame of reference;
- a map referencing the position of each island (Z14, Z24, Z34, Z44, Z54) in the overall frame of reference; and
- means for identifying, on the basis of said map and said position of the tub (40), the island in which this tub (40) is located.

6. Device according to one of the preceding claims, wherein:
- the host computer (6) hosting the register (100) or another computer communicating with the latter includes means for communicating with each tub (20; 30; 40) in order to deliver a signal representative of an identifier of each tub and of at least the value of the datum of one of the fields (101, 102, 103, 104) of the record (105) corresponding to this tub (20; 30; 40); and
- the tubs include receiving means (26, 35, 46) for receiving and interpreting this signal and displaying means (23, 24; 33, 34; 43, 44) for displaying, if the identifier corresponds to the tub, an information item corresponding to the value of the received datum.

7. Device according to the preceding claim, wherein the displaying means (23; 33; 43) include a light-emitting diode and/or a display screen.

8. Device according to one of the preceding claims, wherein each record (105) of the register (100) includes a third field (103) for a datum relating to the expected delivery date of the pair of spectacles corresponding to this record (105).

9. Device according to the preceding claim, including a monitoring script (120) that is installed on the host computer (6) hosting the register (100) or on another computer communicating with the latter, for searching for records (105) of the register (100) the value of the delivery-date datum of the third field (103) of which differs from an overall datum of same nature relating to a current date, such as today's date, by a length of time shorter than a minimum amount of time that is preset and that is associated with the value of the island-indicating datum of the second field (102) of the record (105) in question.

10. Device according to one of the preceding claims, wherein each record (105) of the register (100) includes a fourth field (104) for a datum relating to the prescriptions of a future wearer of the pair of spectacles corresponding to this record (105).
